# EUROPÄISCHE PATENTANMELDUNG

(11) **EP 3 929 400 A1**
(43) Veröffentlichungstag der Anmeldung: **29.12.2021**
(21) Anmeldenummer: 21181703.6
(22) Anmeldetag: 25.06.2021
(51) Int. Cl.: F01C 19/00, F04C 2/344, F04C 15/00, F16J 15/10, F16J 15/54

(54) **PUMPE MIT AXIAL WIRKSAMER FEDERDICHTUNG**

(30) Priorität: 25.06.2020 DE 102020116748
(71) Anmelder: Schwäbische Hüttenwerke Automotive GmbH, 73433 Aalen (DE)
(72) Erfinder: Welte, Claus, 88326 Aulendorf (DE)
(74) Vertreter: SSM Sandmair

(57) **Zusammenfassung**

Pumpe zur Beaufschlagung eines Aggregats, beispielsweise eines Getriebes, mit Fluid, wobei die Pumpe Folgendes umfasst:
(a) ein Pumpengehäuse (1) mit
- einer Gehäuse-Umfangswand (2), die eine Förderkammer (5) der Pumpe umgibt,
- einer Gehäuse-Stirnwand (3) mit einer der Förderkammer (5) axial abgewandten äußeren Gehäuse-Stirnfläche (14),
- einem Einlass (6) für das Fluid und
- einem an der äußeren Gehäuse-Stirnfläche (14) mündenden Auslass (8) für das Fluid,

(b) ein in der Förderkammer (5) bewegliches Förderglied (10, 11) zur Förderung des Fluids von einer den Einlass (6) umfassenden Niederdruckseite der Pumpe zu einer den Auslass (8) umfassenden Hochdruckseite der Pumpe, und
(c) eine Axialdichtung, die den Auslass (8) zur Trennung von der Niederdruckseite in axialer Sicht auf die Gehäuse-Stirnwand (3) vollständig umgibt,
(d) wobei die Axialdichtung eine Federdichtung (15; 15a; 15b; 15c; 41) in Form einer Tellerfeder oder Hohlprofilfeder oder V-Profilfeder oder Balgfeder ist.

## Beschreibung

Die Erfindung betrifft eine Pumpe zur Versorgung eines Aggregats, beispielsweise eines Getriebes oder Motors, mit Fluid. Insbesondere betrifft sie eine Dichtungseinrichtung der Pumpe. Die Pumpe kann beispielsweise eine Schmierölpumpe, Kühlmittelpumpe, Vakuumpumpe oder vorzugsweise eine Getriebepumpe sein. Die Pumpe kann einflutig oder mehrflutig, insbesondere mehrkreisig sein. Sie kann als Getriebepumpe zur Versorgung eines Getriebes, beispielsweise eines Automatikgetriebes und/oder Lenkgetriebes eines Fahrzeugs oder eines Getriebes einer Windkraftanlage, mit Druckfluid verwendet werden. In einer anderen Verwendung kann sie als Schmier- und/oder Kühlmittelpumpe zur Versorgung einer Kraftmaschine, beispielsweise eines Antriebsmotors eines Fahrzeugs, insbesondere einer Brennkraftmaschine, mit Schmier- und/oder Kühlmittel, insbesondere Schmieröl, verwendet werden. Als Schmieröl- und/oder Kühlmittelpumpe kann sie insbesondere der Schmierung und/oder Kühlung eines Verbrennungsmotors und/oder eines Elektromotors eines Kraftfahrzeugs dienen. In derartigen Verwendungen kann sie beispielsweise einen Antriebsmotor oder Hilfsantriebsmotor des Kraftfahrzeugs mit dem Druckfluid versorgen. Eine kombinierte Verwendung als Schmieröl- und/oder Kühlmittelpumpe einerseits und als Getriebepumpe andererseits ist ebenfalls denkbar, insbesondere in Ausgestaltungen, in denen die Pumpe mehrflutig ist. Die Pumpe kann vorteilhafterweise in Cartridge-Bauweise und/oder für die Anordnung in einem Aufnahmeschacht ausgeführt sein.

Aus der WO 01/94791 A1 ist eine Pumpe in Form eines Pumpeneinsatzes, der in einem Aufnahmeschacht einer Aufnahmeeinrichtung angeordnet ist, bekannt. Der Pumpeneinsatz ist axial zwischen einem Boden des Aufnahmeschachts und einem Deckel der Aufnahmeeinrichtung angeordnet. Im Betrieb der Pumpe wird Fluid aus einem über den äußeren Umfang der Pumpe erstreckten Niederdruckraum angesaugt und über eine Gehäuse-Stirnwand der Pumpe und den Schachtboden abgefördert. Ein ringförmiges Dichtelement, das den Pumpeneinsatz umgibt und als Radialdichtung wirkt, trennt den Pumpenauslass vom Niederdruckraum. Zwischen dem Boden des Aufnahmeschachts und dem Pumpeneinsatz ist eine Federeinrichtung angeordnet, die den Pumpeneinsatz axial gegen den Deckel spannt. Der Pumpeneinsatz ist in einem geringen Ausmaß relativ zur Aufnahmeeinrichtung gegen die Kraft der Federeinrichtung axial beweglich, so dass Bautoleranzen und Geometrieänderungen ausgeglichen werden können. Die Pumpe weist zwei Arbeitsfluten auf, die in einen gemeinsamen Druckraum fördern, also nicht voneinander getrennt sind. Die Pumpe ist somit als mehrflutige Einkreispumpe ausgeführt.

Die EP 3 081 741 A2 offenbart eine Getriebepumpe mit mehreren Arbeitsfluten. Die Pumpe ist als Mehrkreispumpe ausgeführt und weist dementsprechend separate, gegeneinander abgedichtete Druckauslässe, jeweils wenigstens einen Auslass pro Flut, auf. Ein erster Auslass wird mittels einer ringförmigen Radialdichtung, die ein Gehäuse der Pumpe umgibt, abgedichtet. Innerhalb des mittels der Radialdichtung erhaltenen Druckraums ist eine ringförmige Auslassdichtung angeordnet, die einen zweiten Auslass dichtend umgibt, um den zweiten Auslass vom ersten Druckauslass zu separieren. Die Pumpe ist in Cartridge-Bauweise ausgeführt und wird mit einer äußeren Stirnseite des Pumpengehäuses voran in einen Aufnahmeschacht einer Aufnahmeeinrichtung eingebaut. Ein von der Pumpe gefördertes Druckfluid wird über die Druckauslässe und diesen axial gegenüberliegende Druckanschlüsse der Aufnahmeeinrichtung abgefördert. Eine Federeinrichtung ist an einem Boden des Aufnahmeschachts abgestützt und drückt mit Federkraft gegen die axial zugewandt gegenüberliegende äußere Stirnseite des Pumpengehäuses, wodurch Toleranzen und Geometrieänderungen in axialer Richtung ausgeglichen werden können.

Die US 2017/0260979 A1 offenbart eine Dichtungsanordnung für eine Flügelzellenpumpe in Cartridge-Bauweise, wobei die Flügelzellenpumpe zwei Arbeitsfluten aufweist und als Zweikreispumpe ausgeführt ist. Die Dichtungsanordnung umfasst eine um den Umfang des Pumpengehäuses umlaufend angeordnete Radialdichtung, die einen ersten Druckraum der Pumpe vom Saugraum trennt, und eine Auslassdichtung, die an einer äußeren Stirnseite des Pumpeneinsatzes angeordnet ist. Die Auslassdichtung trennt den ersten Druckraum von einem zweiten Druckraum der Pumpe und dichtet einen Wellendurchtritt für eine Antriebswelle der Pumpe ab.

Der Stand der Technik verwendet Weichstoff- bzw. Elastomerdichtungen. Werden die Dichtungen als Axialdichtungen eingesetzt, ist es schwierig, die auf Materialelastizität beruhende Dichtwirkung zu gewährleisten. Die axiale Weite der axialen Fuge, die mittels der Axialdichtung abgedichtet wird, kann sich ändern, beispielsweise aufgrund thermisch bedingten Änderungen der Geometrie und/oder druckbedingten Bewegungen des Pumpengehäuses oder von Gehäuseteilen. Die Fugenweite kann auch von Einbaufall zu Einbaufall aufgrund Bauteil- und/oder Einbautoleranzen variieren. Weichstoffdichtungen bzw. Elastomerdichtungen benötigen hohe und über ihren Umfang gleichmäßige Flächenpressungen, um die erforderliche Abdichtung zu erzielen. Ändert sich die Flächenpressung während des Pumpenbetriebs aufgrund Temperatur- und/oder Druckänderungen oder von Pumpe zu Pumpe aufgrund variierender Toleranzen, kann eine gleichbleibend sichere Dichtwirkung nur mit hohem Aufwand gewährleistet werden. Auch die Standfestigkeit ist ein Problem. Bei Pulsationen, hohen Drücken und großen zu überbrückenden Fugenweiten besteht eine erhöhte Spaltextrusionsgefahr. Ein weiteres Problem ist der ständig steigende Kostendruck.

Es ist eine Aufgabe der Erfindung, eine kostengünstige und sichere statische Abdichtung für eine Pumpe zu schaffen. Eine hierfür geeignete Dichtung soll Bauteil- und/oder Einbautoleranzen und/oder thermisch bedingte Geometrieänderungen und/oder druckbedingte Bewegungen der Pumpe oder von Pumpenbauteilen am Einbauort der Dichtung unter Aufrechterhaltung der erforderlichen Dichtwirkung wirksam und zuverlässig auch bei langer Einsatzdauer kompensieren können.

Eine weitere Aufgabe ist die Bereitstellung einer Pumpe, die für die Anordnung in einem Aufnahmeschacht einer Aufnahmeeinrichtung geeignet ist und für diesen Zweck eine Gehäuse-Stirnwand mit einem oder mehreren Druckauslässen zur Abförderung eines Druckfluids aus einer Förderkammer der Pumpe aufweist. Für eine derartige Pumpe soll die Abdichtung des einen oder der mehreren Druckauslässe in Bezug auf Bauteil- und/oder Einbautoleranzen der Aufnahmeeinrichtung und der Pumpe und/oder thermisch bedingten Geometrieänderungen und/oder druckbedingten Bewegungen von Gehäusestrukturen der Pumpe kostengünstig verbessert werden.

Die Erfindung betrifft dementsprechend eine Pumpe zur Versorgung eines Aggregats, beispielsweise eines Getriebes, mit einem Fluid, vorzugsweise einer Flüssigkeit, wie etwa Getriebe- und/oder Schmieröl. Die Pumpe umfasst ein Pumpengehäuse mit einer Gehäuse-Umfangswand, einer Gehäuse-Stirnwand, einem Einlass für das Fluid und einem Auslass für das Fluid. Die Gehäuse-Umfangswand umgibt eine Förderkammer der Pumpe. Die Gehäuse-Stirnwand weist eine äußere Gehäuse-Stirnfläche auf, die der Förderkammer axial abgewandt ist. Der Auslass mündet an der äußeren Gehäuse-Stirnfläche. Die Gehäuse-Stirnwand kann von der Förderkammer abgesetzt sein und einfach nur eine äußere Gehäuse-Stirnwand des Pumpengehäuses bilden. Vorzugsweise begrenzt die Gehäuse-Stirnwand jedoch die Förderkammer an einer Stirnseite. Die Gehäuse-Stirnwand kann mit der Gehäuse-Umfangswand in einem Stück geformt, beispielsweise gegossen oder generativ geformt sein. In bevorzugten Ausführungen sind die Gehäuse-Umfangswand und die Gehäuse-Stirnwand jedoch separat voneinander gefertigt und liegen in einem Druckkontakt an zugewandten Stirnseiten aneinander.

Die Pumpe umfasst ein in der Förderkammer bewegliches Förderglied zur Förderung des Fluids von einer den Einlass umfassenden Niederdruckseite der Pumpe zu einer den Auslass umfassenden Hochdruckseite der Pumpe. Die Niederdruckseite der Pumpe erstreckt sich von einem Reservoir für das Fluid über den Einlass des Pumpengehäuses bis in die Förderkammer. Die Hochdruckseite der Pumpe erstreckt sich von der Förderkammer über den Auslass bis zu dem einen oder den gegebenenfalls mehreren mit dem Fluid zu versorgenden Aggregaten. Die Pumpe kann insbesondere als Rotationspumpe ausgeführt und das Förderglied dementsprechend in der Förderkammer drehbeweglich sein. Die Pumpe kann beispielsweise eine Zahnradpumpe, insbesondere eine Außenzahnradpumpe oder eine Innenzahnradpumpe, sein. Sie kann stattdessen aber beispielsweise auch eine Pendelschieberpumpe oder Rollenzellenpumpe sein. In bevorzugten Ausführungen ist sie als Flügelzellenpumpe oder Drehschieberpumpe ausgeführt.

Um den Auslass am Einbauort der Pumpe von der Niederdruckseite zu trennen, umfasst die Pumpe eine Axialdichtung, die den Auslass in axialer Sicht auf die Gehäuse-Stirnwand an der äußeren Gehäuse-Stirnfläche vollständig umgibt. Erfindungsgemäß ist die Axialdichtung eine Federdichtung in Form einer Tellerfeder oder ringförmigen Hohlprofilfeder, V-Profilfeder oder Balgfeder. Die Federdichtung kann die einzige Dichtung sein, die den Auslass von der Niederdruckseite trennt. Alternativ kann eine weitere Dichtung oder können grundsätzlich auch mehrere weitere Dichtungen vorgesehen sein, die jeweils den gleichen Auslass ebenfalls von der Niederdruckseite trennen. "Trennen" bedeutet in diesem Zusammenhang somit, dass die Federdichtung auch alleine eine für den ordnungsgemäßen Pumpenbetrieb ausreichende Abdichtung des Auslasses zur Niederdruckseite bewirken kann.

Tellerfedern und Hohlprofilfedern, aber auch V-Profilfedern und Balgfedern können mit ausreichend großem axialen Federweg, großer Federkonstante und engen Toleranzen, aber dennoch einfach hergestellt werden. Die Federdichtung, d. h. die Tellerfeder, V-Profilfeder, Balgfeder oder Hohlprofilfeder, läuft um den Auslass vollständig, d. h. über 360°, um, so dass eine ringförmig in sich geschlossene Axialdichtung erhalten wird.

Die Federdichtung weist einen ersten Feder-Dichtsteg und einen dem ersten Feder-Dichtsteg axial abgewandten zweiten Feder-Dichtsteg auf. Einer der Feder-Dichtstege ist der äußeren Gehäuse-Stirnfläche axial zugewandt und überlappt in der axialen Sicht mit der äußeren Gehäuse-Stirnfläche, um in einem vollständig um den Auslass umlaufenden Dichtkontakt mit der äußeren Gehäuse-Stirnfläche den Auslass von der Niederdruckseite der Pumpe zu trennen. Die Feder-Dichtstege sind über einen ringförmig geschlossenen Federabschnitt miteinander verbunden. Dieser Federabschnitt ist selbstverständlich rundum geschlossen und somit dicht.

Ist die Federdichtung wie bevorzugt als Tellerfeder ausgeführt, kann sich die Tellerfeder von einem Innenumfang zu einem Außenumfang insbesondere konisch weiten. Die Tellerfeder kann insbesondere ein Kegelstumpfmantel sein. Alternativ kann die Tellerfeder aber auch vom Innenumfang zum Außenumfang konkav oder konvex gewölbt, beispielsweise überall rund oder stattdessen mit einem Knick oder polygonal gewölbt sein.

Die Federdichtung kann insbesondere als Metallfeder und Metalldichtung und somit als reines Metallbauteil ausgeführt sein. Eine derartige Federdichtung ist im Vergleich zu Federdichtungen aus Kunststoff oder Kunststoff-Metall-Verbundwerkstoffen weniger empfindlich gegen mechanische und/oder thermische Belastungen, die im Betrieb der Pumpe zu erwarten sind. Als Metall werden reine Metalle und Metalllegierungen verstanden. In zweckmäßigen Ausführungen besteht die Federdichtung aus einem Federstahl.

Die Federdichtung kann die einzige Dichtung sein, die den Auslass von der Niederdruckseite trennt. Die Pumpe kann zusätzlich zur erfindungsgemäßen Federdichtung aber auch eine weitere Dichtung umfassen, die ebenfalls dazu dient, den gleichen Auslass und/oder einen weiteren Auslass von der Niederdruckseite der Pumpe zu trennen. In vorteilhaften Ausführungen ist die weitere Dichtung eine Sickendichtung. Die weitere Dichtung kann insbesondere eine reine Metalldichtung sein. Die weitere Dichtung kann beispielsweise eine Hohlprofilfeder, V-Profilfeder, Balgfeder sein. Bevorzugter ist die weitere Dichtung eine Sickendichtung oder Tellerfeder. Vorteilhafte Kombinationen aus Federdichtung und weiterer Dichtung sind zum einen eine Tellerfeder und eine Sickendichtung und zum anderen eine erste Tellerfeder und eine zweite Tellerfeder.

In Ausführungen, in denen die Pumpe zusätzlich zur Federdichtung die weitere Dichtung umfasst, wird es bevorzugt, wenn die Federdichtung, d. h. die Tellerfeder, Hohlprofilfeder, V-Profilfeder oder Balgfeder, in dem von der Niederdruckseite der Pumpe zur Hochdruckseite der Pumpe entlang des Pumpengehäuses erstreckten Druckpfad die der Niederdruckseite nächste Dichtung ist. Für Ausführungen der Pumpe, in denen der Auslass nur mittels der erfindungsgemäßen Federdichtung von der Niederdruckseite getrennt wird, gilt dies von Hause aus.

Die erfindungsgemäße Federdichtung kann vorteilhafterweise aus dem Stand der Technik bekannte Kunststoffdichtungen oder Kunststoffverbunddichtungen ersetzen. Besonders vorteilhaft ist, dass auf eine Radialdichtung, wie sie üblicherweise zwischen der Hochdruckseite und der Niederdruckseite am Außenumfang des Pumpengehäuses angeordnet ist, verzichtet werden kann.

Die Pumpe eignet sich für die Anordnung in oder an einer Aufnahmeeinrichtung, die eine Aufnahme-Stirnfläche aufweist, an der ein Anschluss für den Auslass des Pumpengehäuses mündet. Das Pumpengehäuse kann für eine Befestigung in oder an der Aufnahmeeinrichtung so gestaltet sein, dass die äußere Gehäuse-Stirnfläche im montierten Zustand der Pumpe der Aufnahme-Stirnfläche über eine axiale Fuge gegenüberliegt, wobei der Auslass zweckmäßigerweise dem Anschluss der Aufnahme-Stirnfläche axial in einer Flucht zugewandt ist. Die Federdichtung ist im montierten Zustand der Pumpe zwischen der Gehäuse-Stirnfläche und der Aufnahme-Stirnfläche axial elastisch gespannt, so dass sie mit einem der genannten Feder-Dichtstege axial gegen die Gehäuse-Stirnfläche und mit dem anderen der genannten Feder-Dichtstege axial gegen die Aufnahme-Stirnfläche drückt und den Auslass des Pumpengehäuses und den Anschluss der Aufnahmeeinrichtung jeweils vollständig umgibt und von der Niederdruckseite trennt.

In Ausführungen, in denen die Gehäuse-Stirnwand und/oder optional eine weitere Gehäuse-Stirnwand separat von der Gehäuse-Umfangswand gefertigt und mit dieser stirnseitig nur in einem Druckkontakt ist oder jeweils sind, kann die Federdichtung vorteilhafterweise zumindest einen wesentlichen Teil der für einen fluiddichten Druckkontakt erforderlichen Axialkraft aufbringen. Das Pumpengehäuse wird in derartigen Ausführungen im Bereich der Gehäuse-Umfangswand oder vorzugsweise der weiteren Gehäuse-Stirnwand axial in oder an der Aufnahmeeinrichtung fixiert, beispielsweise mittels Schraubverbindung, während die Federdichtung in der Fuge zwischen Gehäuse-Stirnfläche und Aufnahme-Stirnfläche axial auf Druck gespannt ist und dadurch die Gehäuse-Stirnwand gegen die Gehäuse-Umfangswand drückt. In dieser Anordnung kompensiert die Federdichtung unter Aufrechterhaltung eines ausreichend hohen Axialdrucks etwaige mechanisch und/oder thermisch bedingte Geometrieänderungen des Pumpengehäuses. Zusätzlich oder stattdessen kann die Federdichtung Bauteiltoleranzen in der axialen Toleranzkette des Pumpengehäuses, d. h. Abweichungen in den axialen Abmessungen des Pumpengehäuses von einer Pumpe zu einer anderen Pumpe kompensieren.

Die Federdichtung übernimmt in derartigen Ausführungen zum einen die Dichtfunktion für den Auslass des Pumpengehäuses und zum anderen die Funktion einer Andrückeinrichtung, welche separat gefertigte Gehäusewände in einem fluiddichten axialen Druckkontakt hält.

Umfasst die Pumpe die weitere Dichtung und sind die Federdichtung und die weitere Dichtung im gleichen Druckpfad angeordnet, ist die erfindungsgemäße Federdichtung vorteilhafterweise die der weiteren Dichtung im Druckpfad nächste Dichtung. In derartigen Ausführungen ist im Druckpfad von der Hochdruckseite zur Niederdruckseite keine weitere Dichtung zwischen der erfindungsgemäßen Federdichtung und der weiteren Dichtung angeordnet.

Wenn vorstehend vom "Druckpfad" die Rede ist, so ist damit ein vom Auslass am Pumpengehäuse entlang zur Niederdruckseite der Pumpe, beispielsweise zum Einlass der Pumpe, erstreckter, kürzester Pfad für das Fluid gemeint. Die erfindungsgemäße Federdichtung ist in diesem Druckpfad angeordnet. Die weitere Dichtung, falls vorhanden, kann im gleichen Druckpfad angeordnet sein. Bei dem Druckpfad handelt es sich um einen Leckagepfad, der nicht zuletzt mittels der erfindungsgemäßen Federdichtung abgedichtet ist, um den Auslass von unvermeidbaren Leckagen abgesehen, von der Niederdruckseite der Pumpe fluidisch zu trennen.

Die Pumpe kann einflutig ausgeführt sein und den Auslass als einzigen Auslass aufweisen. Bevorzugter ist die Pumpe jedoch mehrflutig und weist einen oder mehrere weitere Auslässe für das von der Pumpe geförderte Fluid auf. In mehrflutigen Ausführungen kann das durch die mehreren Auslässe geförderte Fluid stromabwärts der mehreren Auslässe wieder zusammengeführt werden. Bevorzugter ist die mehrflutige Pumpe jedoch mehrkreisig, d. h. die mehreren Auslässe sind voneinander getrennt und fördern das Fluid in jeweils einen zugeordneten Kreis mit unterschiedlichen Aggregaten und/oder zu unterschiedlichen Bereichen des gleichen Aggregats. In den mehrkreisigen Ausführungen bilden der Einlass und der Auslass einen ersten Kreis, und zusätzlich kann nicht nur ein weiterer Auslass, sondern auch ein weiterer Einlass vorgesehen sein, die gemeinsam einen zweiten Kreis bilden, der vom ersten Kreis getrennt ist.

In mehrflutigen Ausführungen und auch in mehrkreisigen Ausführungen kann die erfindungsgemäße Federdichtung die mehreren Auslässe umgeben und gemeinsam von der Niederdruckseite der Pumpe trennen. In bevorzugten ersten Ausführungen trennt die Federdichtung die mehreren Auslässe jedoch nicht voneinander, sondern umgibt sie als eine für die mehreren Auslässe gemeinsame Axialdichtung. Insbesondere in derartigen Ausführungen kann eine weitere Dichtung vorgesehen sein, um in der axialen Sicht innerhalb der erfindungsgemäßen Federdichtung die mehreren Auslässe oder wenigstens einen von mehreren Auslässen gegen den einen oder mehrere weitere Auslässe abzudichten. Grundsätzlich kann die Dichtungsanordnung aber auch so gestaltet sein, dass die erfindungsgemäße Federdichtung nur einen von mehreren Auslässen oder eine Untergruppe mehrerer Auslässe umgibt, während die weitere Dichtung die erfindungsgemäße Federdichtung und einen oder mehrere in der axialen Sicht außerhalb der erfindungsgemäßen Federdichtung liegende Auslässe umgibt und von der Niederdruckseite trennt. Die erfindungsgemäße Federdichtung kann im Druckpfad (Leckagepfad) somit stromauf der weiteren Dichtung angeordnet sein, bevorzugter ist sie im Druckpfad jedoch stromab der weiteren Dichtung, d. h. näher zur Niederdruckseite als die weitere Dichtung, angeordnet.

In mehrflutigen, insbesondere mehrkreisigen Ausführungen kann die erfindungsgemäße Federdichtung in der axialen Sicht einen oder mehrere der Auslässe dichtend umgeben, während eine weitere Dichtung einen anderen oder mehrere andere der Auslässe dichtend umgibt. Die weitere Dichtung ist ebenfalls eine Axialdichtung und kann eine Federdichtung in Form einer Tellerfeder, Hohlprofilfeder, V-Profilfeder oder Balgfeder sein. Die beiden Federdichtungen können der Bauart nach unterschiedlich oder vorzugsweise gleich sein. Die beiden Federdichtungen können in diesen Ausführungen insbesondere parallel zueinander in unterschiedlichen Druckpfaden, d. h. jede der Federdichtungen in einem eigenen Druckpfad, angeordnet sein. Eine bevorzugte Kombination sind zwei Tellerfedern, die in der axialen Sicht nebeneinander angeordnet sind.

Die nebeneinander angeordneten Federdichtungen, vorzugsweise Tellerfedern, können zu einer Dichtungseinheit zusammengefasst sein, indem ein Verbindungssteg die beiden Federdichtungen miteinander verbindet. Dies vereinfacht die Handhabung bei der Vormontage der Pumpeneinheit und/oder bei der Montage der Pumpe. Der Verbindungssteg ist zweckmäßigerweise quer zur Federrichtung bzw. axialen Richtung nachgiebig, so dass die Federdichtungen beim axialen Spannen und Entspannen, d. h. beim Einfedern und Ausfedern, relativ zueinander beweglich sind. Der Verbindungssteg kann beispielsweise ein Bügel oder mehrfach gebogener, mäanderförmiger Verbindungssteg sein, der quer zur axialen Richtung nachgiebig ist, um die Relativbewegung zu erlauben. Vorzugsweise ist der Verbindungssteg federelastisch und ausreichend steif, um die Federdichtungen für die Vormontage der Pumpeneinheit und auch für die Montage der Pumpe relativ zueinander in einer definierten Ausgangsposition zu halten. Die Dichtungseinheit kann bei der Vormontage der Pumpeneinheit vorteilhafterweise im Bereich des Verbindungsstegs mit dem Pumpengehäuse gefügt werden.

In Ausführungen, in denen die Federdichtung separat gefertigte Gehäusewände im axialen Druckkontakt hält, grundsätzlich aber auch in Ausführungen, in denen die Gehäuse-Umfangswand und die Gehäuse-Stirnwand in einem Stück geformt oder miteinander in anderer Weise gefügt sind, kann die Federdichtung vorteilhafterweise zwischen der Gehäuse-Stirnfläche und der Aufnahme-Stirnfläche in einem Krafthauptschluss angeordnet sein. Umfasst die Pumpe auch die weitere Dichtung, kann diese im Kraftnebenschluss zur erfindungsgemäßen Federdichtung angeordnet sein. Dies gilt insbesondere für Ausführungen, in denen die Federdichtung und die weitere Dichtung im gleichen Druckpfad in geschachtelter Anordnung angeordnet sind. In Ausführungen, in denen die Federdichtung und die weitere Dichtung in der axialen Sicht nebeneinander in unterschiedlichen Druckpfaden angeordnet sind, kann die weitere Dichtung im Kraftnebenschluss zur erfindungsgemäßen Federdichtung oder, vorteilhafter, ebenfalls im Krafthauptschluss angeordnet sein.

Die erfindungsgemäße Federdichtung ist in vorteilhaften Ausführungen so angeordnet, dass sie im drucklosen Zustand der montierten Pumpe unter einer axialen Vorspannkraft steht. In Ausführungen, in denen als weitere Dichtung beispielsweise eine Sickendichtung vorgesehen ist, kann auch diese weitere Dichtung im drucklosen Zustand der montierten Pumpe mit einer Vorspannkraft angeordnet sein. Dabei ist die Vorspannkraft der erfindungsgemäßen Federdichtung in zweckmäßigen Ausführungen größer als die Vorspannkraft der als Sickendichtung ausgeführten weiteren Dichtung.

Sind die Federdichtung und die weitere Dichtung geschachtelt angeordnet, derart, dass die eine Dichtung die andere in der axialen Sicht umgibt, ist es vorteilhaft, wenn die erfindungsgemäße Federdichtung eine größere Federkonstante als die weitere Dichtung hat, zumindest in Ausführungen, in denen die weitere Dichtung als Sickendichtung ausgeführt ist. Hinsichtlich der Federeigenschaft ist es vorteilhaft, wenn die als Tellerfeder, V-Profilfeder, Balgfeder oder als Hohlprofilfeder ausgeführte Federdichtung eine Federkonstante hat, die mindestens doppelt so groß oder wenigstens dreimal so groß oder wenigstens fünfmal so groß wie die Federkonstante der weiteren Dichtung ist.

Sind die erfindungsgemäße Federdichtung und die weitere Dichtung der Bauart nach gleich, beispielsweise jeweils als Tellerfeder ausgeführt, können diese beiden Federdichtungen zwar grundsätzlich in geschachtelter Anordnung im gleichen Druckpfad angeordnet sein, in vorteilhaften Ausführgen sind sie jedoch in der axialen Sicht nebeneinander und in unterschiedlichen Druckpfaden angeordnet. In derartigen Anordnungen können die zwei bauartgleichen Federdichtungen zwar grundsätzlich ungleiche, bevorzugter jedoch zumindest im Wesentlichen gleiche Federkonstanten haben.

Die Pumpe kann beispielsweise eine Linearhubpumpe oder, bevorzugter, eine Rotationspumpe sein. Sie kann als Rotationspumpe außenachsig, beispielsweise eine Außenzahnradpumpe, oder innenachsig, beispielsweise eine Flügelzellenpumpe, Innenzahnradpumpe oder Pendelschieberpumpe, sein. Das Förderglied kann einen in der Förderkammer um eine Drehachse drehbeweglichen Rotor umfassen, der dazu dient, das Fluid von einem oder mehreren Einlässen zu einem oder mehreren Auslässen zu fördern. Der Rotor kann vorteilhafterweise zur Bildung von Förderzellen dienen, die sich bei Drehung des Rotors periodisch vergrößern und verkleinern, um das Fluid von der Niederdruckseite der Pumpe zur Hochdruckseite der Pumpe zu fördern.

Ist die Pumpe wie bevorzugt in einem Fahrzeug angeordnet, kann die Pumpe vom Antriebsmotor des Fahrzeugs, beispielsweise einem Verbrennungsmotor oder einem Elektromotor, angetrieben werden. In Hybridfahrzeugen kann die Pumpe entweder vom Antriebs-Verbrennungsmotor oder vom Antriebs-Elektromotor angetrieben werden. In einer vorteilhaften Modifikation kann der Antrieb der Pumpe auch so gestaltet sein, dass die Pumpe wahlweise vom Verbrennungsmotor oder vom Elektromotor oder von diesen beiden Motoren gemeinsam antreibbar ist. So können der Verbrennungsmotor und der Elektromotor die Pumpe insbesondere über ein Additionsgetriebe antreiben.

Auch in den nachstehend formulierten Aspekten werden Merkmale der Erfindung beschrieben. Die Aspekte sind in der Art von Ansprüchen formuliert und können diese ersetzen. In den Aspekten offenbarte Merkmale können die Ansprüche ferner ergänzen und/oder relativieren, Alternativen zu einzelnen Merkmalen aufzeigen und/oder Anspruchsmerkmale erweitern. In Klammern gesetzte Bezugszeichen beziehen sich auf nachfolgend in Figuren illustrierte Ausgestaltungsbeispiele der Erfindung. Sie schränken die in den Aspekten beschriebenen Merkmale nicht unter den Wortsinn als solchen ein, zeigen andererseits jedoch bevorzugte Möglichkeiten der Verwirklichung des jeweiligen Merkmals auf.
Aspekt 1. Pumpe zur Beaufschlagung eines Aggregats, beispielsweise eines Getriebes, mit Fluid, die Pumpe umfassend:
   (a) ein Pumpengehäuse (1) mit
      - einer Gehäuse-Umfangswand (2), die eine Förderkammer (5) der Pumpe umgibt,
      - einer Gehäuse-Stirnwand (3) mit einer der Förderkammer (5) axial abgewandten äußeren Gehäuse-Stirnfläche (14),
      - einem Einlass (6) für das Fluid und
      - einem an der äußeren Gehäuse-Stirnfläche (14) mündenden Auslass (8) für das Fluid,
   (b) ein in der Förderkammer (5) bewegliches Förderglied (10, 11) zur Förderung des Fluids von einer den Einlass (6) umfassenden Niederdruckseite der Pumpe zu einer den Auslass (8) umfassenden Hochdruckseite der Pumpe, und
   (c) eine Axialdichtung, die den Auslass (8) zur Trennung von der Niederdruckseite in axialer Sicht auf die Gehäuse-Stirnwand (3) vollständig umgibt,
   (d) wobei die Axialdichtung eine Federdichtung (15; 15a; 15b; 15c; 41) in Form einer Tellerfeder oder Hohlprofilfeder oder V-Profilfeder oder Balgfeder ist.
Aspekt 2. Pumpe nach dem vorhergehenden Aspekt, wobei die Federdichtung (15; 41) eine Tellerfeder und von einem Innenumfang zu einem Außenumfang konisch oder in Bezug auf die Gehäuse-Stirnwand (3) konkav oder konvex gewölbt ist.
Aspekt 3. Pumpe nach einem der vorhergehenden Aspekte, wobei die Federdichtung (15; 41) eine Tellerfeder mit einen Innenumfang und einem zum Innenumfang axial versetzten Außenumfang ist, wobei die Federdichtung (15; 41) dem Innenumfang nahe vollständig umlaufend einen ersten Feder-Dichtsteg (16) und dem Außenumfang nahe vollständig umlaufend einen dem ersten Feder-Dichtsteg (16) axial abgewandten zweiten Feder-Dichtsteg (17) aufweist, und wobei einer dieser Feder-Dichtstege (16, 17) der äußeren Gehäuse-Stirnfläche (14) axial zugewandt ist und in der axialen Sicht mit der äußeren Gehäuse-Stirnfläche (14) überlappt, um in einem vollständig umlaufenden Dichtkontakt mit der äußeren Gehäuse-Stirnfläche (14) den Auslass (8) von der Niederdruckseite zu trennen.
Aspekt 4. Pumpe nach dem vorhergehenden Aspekt, wobei sich die Federdichtung (15; 41) über eine der äußeren Gehäuse-Stirnfläche (14) axial zugewandte erste Stirnfläche und über eine der äußeren Gehäuse-Stirnfläche (14) axial abgewandte zweite Stirnfläche vom Innenumfang zum Außenumfang erstreckt, ein erster Übergangsbereich den Innenumfang umlaufend mit der ersten Stirnfläche, ein zweiter Übergangsbereich den Außenumfang umlaufend mit der zweiten Stirnfläche, ein dritter Übergangsbereich (18) den Innenumfang umlaufend mit der zweiten Stirnfläche und ein vierter Übergangsbereich (19) den Außenumfang umlaufend mit der ersten Stirnfläche verbinden, einer der Feder-Dichtstege (16, 17) im ersten Übergangsbereich verläuft und der andere der Feder-Dichtstege (16, 17) im zweiten Übergangsbereich verläuft, und wobei wenigstens einer der Feder-Dichtstege (16, 17) im Vergleich zum dritten und/oder vierten Übergangsbereich (18, 19) abgeflacht und/oder mit einem größeren Krümmungsradius gerundet ist.
Aspekt 5. Pumpe nach Aspekt 1, wobei die Federdichtung (15a) eine ringförmig in einem geschlossenen Bogen umlaufende Hohlprofilfeder und in Querschnitten geschlossen, beispielsweise ringkreisförmig, ist.
Aspekt 6. Pumpe nach Aspekt 1, wobei die Federdichtung (15b) eine ringförmig in einem geschlossenen Bogen umlaufende Hohlprofilfeder und in Querschnitten geschlitzt, beispielsweise C-förmig, ist.
Aspekt 7. Pumpe nach Aspekt 1, wobei die Federdichtung (15c) eine ringförmig in einem geschlossenen Bogen umlaufende V-Profilfeder (15c) ist, wobei das V-Profil zwischen der Gehäuse-Stirnfläche (14) und der Aufnahme-Stirnfläche (34) vorzugsweise liegend angeordnet ist und sich vorzugsweise in Richtung auf den Auslass (8) öffnet.
Aspekt 8. Pumpe nach einem der vorhergehenden Aspekte, wobei die Federdichtung (15; 15a; 15b; 15c; 41) eine reine Metallfeder ist.
Aspekt 9. Pumpe nach einem der vorhergehenden Aspekte, wobei die Federdichtung (15; 15a; 15b; 15c, 41) in dem von der Hochdruckseite zur Niederdruckseite entlang des Pumpengehäuses (1) erstreckten Druckpfad eine der Niederdruckseite nächste Dichtung ist.
Aspekt 10. Pumpe nach einem der vorhergehenden Aspekte, wobei die Federdichtung (15; 15a; 15b; 15c; 41) in dem vom Auslass (8) zur Niederdruckseite entlang des Pumpengehäuses (1) erstreckten Druckpfad eine der Niederdruckseite nächste Dichtung ist.
Aspekt 11. Pumpe nach einem der vorhergehenden Aspekte, wobei die Federdichtung (41) in dem vom Auslass (8) zur Niederdruckseite entlang des Pumpengehäuses (1) erstreckten Druckpfad eine dem Auslass (8) nächste Dichtung ist.
Aspekt 12. Pumpe nach einem der vorhergehenden Aspekte, wobei in dem von der Hochdruckseite zur Niederdruckseite entlang des Pumpengehäuses (1) erstreckten Druckpfad auf eine Dichtung am Umfang des Pumpengehäuses (1) verzichtet wird.
Aspekt 13. Pumpe nach einem der vorhergehenden Aspekte, wobei am Pumpengehäuse (1) keine Radialdichtung zur Trennung der Hochdruckseite von der Niederdruckseite vorgesehen ist.
Aspekt 14. Pumpe nach einem der vorhergehenden Aspekte, wobei die Pumpe eine weitere Dichtung (20) umfasst, die in der axialen Sicht den Auslass (8) zur Abdichtung umgibt, und wobei die Federdichtung (15; 15a; 15b; 15c) die weitere Dichtung (20) oder die weitere Dichtung (20) die Federdichtung (15; 15a; 15b; 15c) umgibt.
Aspekt 15. Pumpe nach dem vorhergehenden Aspekt, wobei die Federdichtung (15; 15a; 15b; 15c) mittels der weiteren Dichtung (20) am Pumpengehäuse (1) gehalten wird.
Aspekt 16. Pumpe nach einem der zwei unmittelbar vorhergehenden Aspekte, wobei die weitere Dichtung (20) am Pumpengehäuse (1) gehalten, vorzugsweise mit dem Pumpengehäuse (1) gefügt ist und die Federdichtung (15; 15a; 15b; 15c) von der äußeren Gehäuse-Stirnfläche (14) aus gesehen hintergreift und dadurch der äußeren Gehäuse-Stirnfläche (14) axial unmittelbar zugewandt am Pumpengehäuse (1) hält.
Aspekt 17. Pumpe nach einem der drei unmittelbar vorhergehenden Aspekte, wobei die weitere Dichtung (20) ebenfalls eine Axialdichtung ist.
Aspekt 18. Pumpe nach einem der vier unmittelbar vorhergehenden Aspekte, wobei die weitere Dichtung (20) eine Sickendichtung, vorzugsweise eine Metallsickendichtung ist.
Aspekt 19. Pumpe nach dem vorhergehenden Aspekt, wobei die weitere Dichtung (20) nicht mit Elastomer beschichtet, vorzugsweise elastomerfrei ist.
Aspekt 20. Pumpe nach einem der sechs unmittelbar vorhergehenden Aspekte, die weitere Dichtung (20) umfassend:
   - eine Sickenschleife (23), die in einer axialen Sicht einen Innenbereich (26) umgibt und eine Sickenstirnfläche für axialen Kontakt mit der äußeren Gehäuse-Stirnfläche (14) aufweist,
   - einen im Innenbereich (26) gelegenen Durchgang (29) für Fluid,
   - wobei die Sickenschleife (23) eine kleinste, den Durchgang (29) umgebende Sickenschleife ist, und
   - eine Versteifungsstruktur (28), die sich in der axialen Sicht von der Sickenschleife (23) in den Innenbereich (26) erstreckt, um die Sickenschleife (23) zu versteifen.
Aspekt 21. Pumpe nach einem der sieben unmittelbar vorhergehenden Aspekte, wobei die Federdichtung (15; 15a; 15b; 15c) in dem von der Niederdruckseite zur Hochdruckseite erstreckten Druckpfad eine der weiteren Dichtung (20) nächste Dichtung ist.
Aspekt 22. Pumpe nach einem der vorhergehenden Aspekte, wobei die Gehäuse-Umfangswand (2), die Gehäuse-Stirnwand (3) und optional eine weitere Gehäuse-Stirnwand (4) des Pumpengehäuses (1) separat voneinander gefertigt und als vormontierte Einheit axial nebeneinander angeordnet sind, vorzugsweise in einem losen axialen Kontakt unmittelbar aneinander liegen, und mittels einer Halteeinrichtung (13) lose zusammengehalten werden.
Aspekt 23. Pumpe nach dem vorhergehenden Aspekt und Aspekt 14, wobei die weitere Dichtung (20) mittels der Halteeinrichtung (13) oder unabhängig von dieser unmittelbar an der Gehäuse-Stirnwand (3) axial gehalten ist und die Federdichtung (15; 15a; 15b; 15c) hält, vorzugsweise indem sie die Federdichtung (15; 15a; 15b; 15c) von der Gehäuse-Stirnwand (3) aus gesehen hintergreift.
Aspekt 24. Pumpe nach einem der vorhergehenden Aspekte und Aspekt 14, wobei die Pumpe in oder an einer Aufnahmeeinrichtung (30) montiert ist und die weitere Dichtung (20) zwischen der äußeren Gehäuse-Stirnfläche (14) und einer Aufnahme-Stirnfläche (34) der Aufnahmeeinrichtung (30) in einem axialen Kraftnebenschluss zur Federdichtung (15; 15a; 15b; 15c) angeordnet ist.
Aspekt 25. Pumpe nach einem der vorhergehenden Aspekte, wobei die Pumpe eine erste Flut mit dem Einlass (6) und dem Auslass (8) und eine weitere Flut mit einem weiteren Auslass (9) und optional einem weiteren Einlass (7) umfasst und die Federdichtung (15; 15a; 15b; 15c) in der axialen Sicht auch den weiteren Auslass (9) umgibt, um die Auslässe (8, 9) von der Niederdruckseite zu trennen.
Aspekt 26. Pumpe nach einem der vorhergehenden Aspekte, wobei die Federdichtung (15; 15a; 15b; 15c) in der axialen Sicht einen Kreisring bildet.
Aspekt 27. Pumpe nach einem der Aspekte 1 bis 24, wobei die Pumpe eine erste Flut mit dem Einlass (6) und dem Auslass (8) und eine weitere Flut mit einem weiteren Auslass (9) und optional einem weiteren Einlass (7) und eine weitere Axialdichtung in Form einer weiteren Federdichtung (42) umfasst, die in der axialen Sicht den weiteren Auslass (9) umgibt, wobei die Federdichtungen (41, 42) Tellerfedern und in der axialen Sicht nebeneinander angeordnet sind, um die Auslässe (8, 9) voneinander und von der Niederdruckseite zu trennen.
Aspekt 28. Pumpe nach dem vorhergehenden Aspekt, wobei die Pumpe in oder an einer Aufnahmeeinrichtung (30) montiert ist und die Federdichtung (41) und die weitere Dichtung (42) zwischen der äußeren Gehäuse-Stirnfläche (14) und einer Aufnahme-Stirnfläche (34) der Aufnahmeeinrichtung (30) nebeneinander jeweils in einem axialen Krafthauptschluss angeordnet sind.
Aspekt 29. Pumpe nach einem der zwei unmittelbar vorhergehenden Aspekte, wobei ein Verbindungssteg (45) die Federdichtungen (41, 42) zu einer als Einheit handhabbaren Dichtungseinheit (40) miteinander verbindet.
Aspekt 30. Pumpe nach dem vorhergehenden Aspekt, wobei der Verbindungssteg (45) elastisch nachgiebig ist, um mit Änderungen der Federspannung einhergehende Bewegungen der Federdichtungen (41, 42) relativ zueinander zu erlauben.
Aspekt 31. Pumpe nach einem der zwei unmittelbar vorhergehenden Aspekte, wobei die Federdichtungen (41, 42) mittels des Verbindungsstegs (45) am Pumpengehäuse (1) gehalten sind.
Aspekt 32. Pumpe nach einem der fünf unmittelbar vorhergehenden Aspekte, wobei sich in einem Innenbereich der Federdichtung (41) und/oder in einem Innenbereich der weiteren Dichtung (42) eine flächenhafte, vorzugsweise plane, vom Fluid durchströmbare Widerstandsstruktur (43) erstreckt, die im Betrieb der Pumpe einen Strömungswiderstand für das Fluid bildet, aber das Ein- und Ausfedern der Federdichtung (41) und/oder der weiteren Dichtung (42) allenfalls vernachlässigbar verhindert.
Aspekt 33. Pumpe nach einem der vorhergehenden Aspekte, wobei die Federdichtung (15; 15a; 15b; 15c; 41) in einem montierten, drucklosen Zustand der Pumpe unter einer axialen Vorspannung steht und die Gehäuse-Stirnwand (3) axial in Richtung auf die Gehäuse-Umfangswand (2), vorzugsweise unmittelbar gegen die Gehäuse-Umfangswand (2), presst.
Aspekt 34. Pumpe nach einem der vorhergehenden Aspekte, wobei die Pumpe in oder an einer Aufnahmeeinrichtung (30) montiert ist und die Federdichtung (15; 15a; 15b; 15c; 41) zwischen der äußeren Gehäuse-Stirnfläche (14) und einer Aufnahme-Stirnfläche (34) der Aufnahmeeinrichtung (30) angeordnet ist und im drucklosen Zustand der Pumpe unter einer axialen Vorspannung steht.
Aspekt 35. Pumpe nach einem der vorhergehenden Aspekte, wobei die Pumpe in oder an einer Aufnahmeeinrichtung (30) montiert ist und die Federdichtung (15; 15a; 15b; 15c; 41) zwischen der äußeren Gehäuse-Stirnfläche (14) und einer Aufnahme-Stirnfläche (34) der Aufnahmeeinrichtung (30) in einem axialen Krafthauptschluss angeordnet und axial gespannt ist.
Aspekt 36. Pumpe nach dem vorhergehenden Aspekt, wobei die weitere Federdichtung (42) zwischen der äußeren Gehäuse-Stirnfläche (14) und der Aufnahme-Stirnfläche (34) ebenfalls im Krafthauptschluss angeordnet ist.
Aspekt 37. Pumpe nach einem der vorhergehenden Aspekte, wobei die Pumpe eine Aufnahmeeinrichtung (30) umfasst oder in einer Aufnahmeeinrichtung (30) angeordnet ist, die Aufnahmeeinrichtung (30) das Pumpengehäuse (1) umgibt und einen Boden mit einer Aufnahme-Stirnfläche (34) und einem Anschluss (31) für den Auslass (8) umfasst und die Federdichtung (15; 15a; 15b; 15c; 41) mit der äußeren Gehäuse-Stirnfläche (14) und der Aufnahme-Stirnfläche (34) jeweils in einem Dichtkontakt ist, um die Hochdruckseite von der Niederdruckseite der Pumpe zu trennen.
Aspekt 38. Pumpe nach dem vorhergehenden Aspekt, wobei das Pumpengehäuse (1) an einer der Gehäuse-Stirnwand (3) axial über die Gehäuse-Umfangswand (2) gegenüberliegenden Stirnseite mit der Aufnahmeeinrichtung (30) axial unbeweglich gefügt ist.
Aspekt 39. Pumpe nach einem der zwei unmittelbar vorhergehenden Aspekte, wobei die Aufnahme-Stirnfläche (34) im Bereich eines ihr axial zugewandten Feder-Dichtstegs (17) der Federdichtung (15; 15a; 15b; 15c; 41) umlaufend glatt, beispielsweise plan ist, um umlaufend eine unterbrechungsfreie Dichtanlage für den ihr axial zugewandten Feder-Dichtsteg (17) zu bilden.
Aspekt 40. Pumpe nach einem der vorhergehenden Aspekte, wobei die äußere Gehäuse-Stirnfläche (14) im Bereich eines ihr axial zugewandten Feder-Dichtstegs (16) der Federdichtung (15; 15a; 15b; 15c; 41) umlaufend glatt, beispielsweise plan ist, um umlaufend eine unterbrechungsfreie Dichtanlage für den ihr axial zugewandten Feder-Dichtsteg (16) zu bilden.
Aspekt 41. Pumpe nach einem der vorhergehenden Aspekte, wobei die Gehäuse-Umfangswand (2) und die Gehäuse-Stirnwand (3) axial in Druckkontakt aneinander liegen und die Förderkammer (5) am Umfang und einer Stirnseite begrenzen, und wobei die Federdichtung (15; 15a; 15b; 15c; 41) in einem montierten Zustand der Pumpe die Gehäuse-Stirnwand (3) mit Federkraft axial gegen die Gehäuse-Umfangswand (2) presst.
Aspekt 42. Pumpe nach einem der vorhergehenden Aspekte, wobei das Pumpengehäuse (1) eine weitere Gehäuse-Stirnwand (4) umfasst und die Gehäuse-Umfangswand (2) und die Stirnwände (3, 4) in einem Stapel axial in Druckkontakt aneinander liegen und die Förderkammer (5) am Umfang und an den Stirnseiten begrenzen, und wobei die Federdichtung (15; 15a; 15b; 15c; 41) in einem montierten Zustand der Pumpe die Stirnwände (3, 4) mit Federkraft axial gegen die Gehäuse-Umfangswand (2) presst.

Nachfolgend werden Ausgestaltungsbeispiele der Erfindung anhand von Figuren erläutert. An den Ausgestaltungsbeispielen offenbar werdende Merkmale bilden jeweils einzeln und in jeder Merkmalskombination die Ansprüche, die Aspekte und die vorstehend darüber hinaus beschriebenen Ausgestaltungen vorteilhaft weiter. Es zeigen:
- Figur 1: eine Pumpe in axialer Sicht auf eine Förderkammer der Pumpe,
- Figur 2: die Pumpe in einer isometrischen Sicht auf eine Stirnseite, an der eine Federdichtung eines ersten Ausführungsbeispiels angeordnet ist,
- Figur 3: eine Anordnung der Pumpe in einer Aufnahmeeinrichtung,
- Figur 4: das Detail Y der Figur 3,
- Figur 5: die Federdichtung des ersten Ausführungsbeispiels,
- Figur 6: eine Federdichtung eines zweiten Ausführungsbeispiels,
- Figur 7: eine Federdichtung eines dritten Ausführungsbeispiels,
- Figur 8: eine Federdichtung eines vierten Ausführungsbeispiels,
- Figur 9: eine weitere Dichtung in einem Längsschnitt,
- Figur 10: eine Federdichtung eines fünften Ausführungsbeispiels in einem Längsschnitt, und
- Figur 11: die Federdichtung des fünften Ausführungsbeispiels in einer isometrischen Sicht.

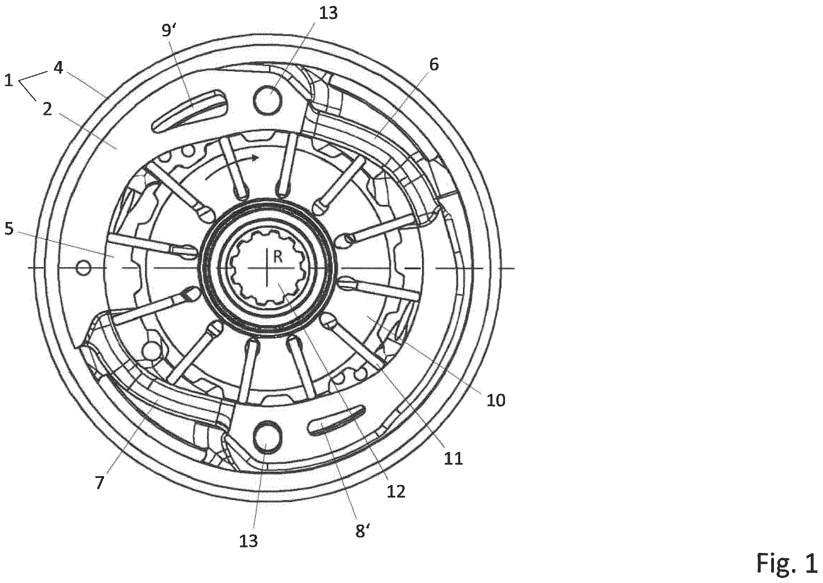

Figur 1 zeigt eine Pumpe in einer axialen Sicht auf ein Pumpengehäuse 1. Im Pumpengehäuse 1 ist eine Förderkammer 5 gebildet. Das Pumpengehäuse 1 umfasst eine Gehäuse-Umfangswand 2, die die Förderkammer 5 umgibt, und Gehäuse-Stirnwände, die die Förderkammer 5 an beiden Stirnseiten axial begrenzen und von denen die eine Gehäuse-Stirnwand 4 erkennbar ist. Die andere der Stirnwände ist in Figur 1 abgenommen, um den Blick in die Förderkammer 5 freizugeben.

Die Pumpe ist als Rotationspumpe ausgeführt und umfasst einen in der Förderkammer 5 um eine Drehachse R drehbaren Rotor 10 und mehrere Flügel 11, die in Schlitzen des Rotors 10 radial beweglich oder zumindest im Wesentlichen in radialer Richtung beweglich geführt sind, wie dies bei Flügelzellenpumpen üblich ist. Der Rotor 10 und die Flügel 11 bilden gemeinsam ein Förderrad der Pumpe. Die Gehäuse-Umfangswand 2 weist an einem Innenumfang eine Führungsfläche für die Flügel 11 auf. Bei Drehung des Rotors 10 werden die Flügel 11 nach außen gegen die Führungsfläche der Gehäuse-Umfangswand 2 gedrückt. Die Führungsfläche bestimmt bei Drehung des Rotors 10, wie weit die Flügel 11 über den Außenumfang des Rotors 10 vorstehen. Die Flügel 11 begrenzen in der Förderkammer 5 gebildete Förderzellen in Umfangsrichtung. Der Verlauf der Führungsfläche der Gehäuse-Umfangswand 2 ist so gewählt, dass sich die Förderzellen bei Drehung des Rotors 10 periodisch auf einer Niederdruckseite der Förderkammer 5 vergrößern und auf einer Hochdruckseite der Förderkammer 5 wieder verkleinern, um ein Fluid, das durch einen Einlass auf der Niederdruckseite der Förderkammer 5 in die Förderkammer 5 strömt, mit erhöhtem Druck als Druckfluid auf der Hochdruckseite der Förderkammer 5 durch einen dort befindlichen Auslass auszustoßen. In vorteilhaften Ausgestaltungen ist die Pumpe dafür eingerichtet, das Fluid durch den Einlass anzusaugen, beispielsweise gegen die Schwerkraft.

Die Pumpe ist mehrflutig, im Ausgestaltungsbeispiel zweiflutig, weist also eine erste Arbeitsflut und eine zweite Arbeitsflut auf. Dementsprechend weist die Förderkammer 5 einen ersten Einlass 6 und einen ersten Auslass für die erste Arbeitsflut sowie einen zweiten Einlass 7 und einen zweiten Auslass für die zweite Arbeitsflut auf. Der Rotor 10 dreht sich im Pumpenbetrieb in Figur 1 im Uhrzeigersinn, was durch einen Drehrichtungspfeil angedeutet ist. Die Druckauslässe sind in der in Figur 1 nicht dargestellten Gehäuse-Stirnwand angeordnet. Mit 8' ist ein auf der Hochdruckseite der ersten Arbeitsflut axial durch die Gehäuse-Umfangswand 2 erstreckter erster Verbindungskanal und mit 9' ist ein auf der Hochdruckseite der zweiten Arbeitsflut axial durch die Gehäuse-Umfangswand 2 erstreckter zweiter Verbindungskanal bezeichnet. Die Verbindungskanäle 8' und 9' verbinden im Bereich der Gehäuse-Stirnwand 4 gebildete Druckräume mit den Druckauslässen der axial gegenüberliegenden, in Figur 1 nicht dargestellten Gehäuse-Stirnwand des Pumpengehäuses 1.

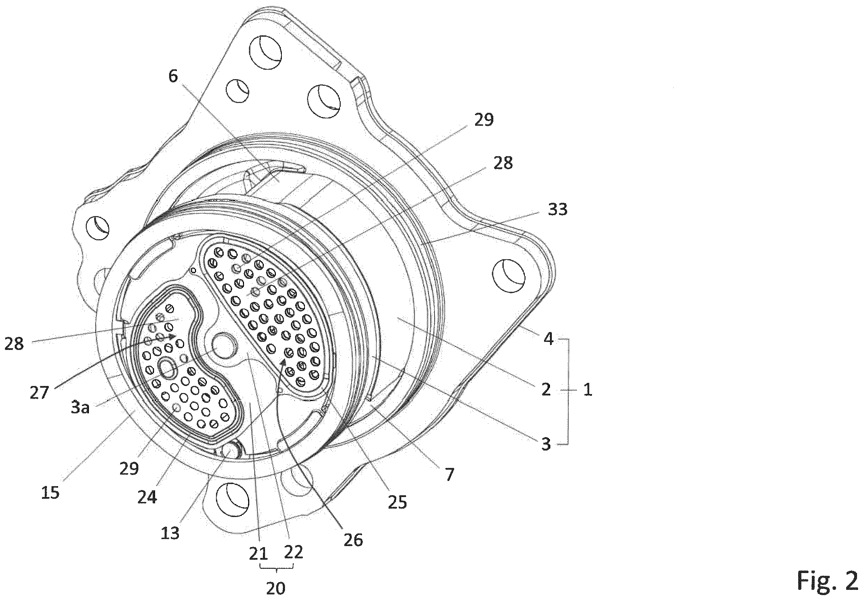

Figur 2 zeigt die Pumpe in einem vormontierten Zustand in einer Isometrie mit Sicht auf eine stirnseitige Auslassseite der Pumpe. Die Auslassseite ist an einer äußeren Stirnseite der in Figur 1 nicht dargestellten, aber in Figur 2 erkennbaren ersten Gehäuse-Stirnwand 3 gebildet. An der äußeren Stirnseite der Gehäuse-Stirnwand 3 sind eine Federdichtung 15 in einem ersten Ausführungsbeispiel und eine weitere Dichtung in Form einer Sickendichtung 20 angeordnet. Die Federdichtung 15 des ersten Ausführungsbeispiels ist eine Tellerfeder. Der erste Auslass und der zweite Auslass münden an der äußeren Stirnseite der Gehäuse-Stirnwand 3. Die Sickendichtung 20 verdeckt diese Druckauslässe. Die in Figur 1 erkennbaren Verbindungskanäle 8' und 9' sind den Druckauslässen zugeordnet, wobei der Verbindungskanal 8' in den durch die Gehäuse-Stirnwand 3 führenden ersten Auslass und der Verbindungskanal 9' in den ebenfalls durch die Gehäuse-Stirnwand 3 führenden zweiten Auslass münden.

Die Sickendichtung 20 weist mehrere Sickenschleifen auf, die jeweils in Form einer Sickenschleife um einen Innenbereich der Sickendichtung 20 umlaufen. In Figur 2 sind eine Sickenschleife 24 und eine Sickenschleife 25 erkennbar. Die Sickenschleife 24 umgibt einen Innenbereich 27 der Sickendichtung 20, der dem zweiten Auslass axial gegenüber liegt und mit diesem in axialer Sicht überlappt. Die Sickenschleife 25 umgibt einen Innenbereich 26 der Sickendichtung 20, der dem ersten Auslass axial gegenüberliegt und in axialer Sicht mit diesem überlappt.

Die Gehäuse-Umfangswand 2 bildet einen geschlossenen Ring, während die Stirnwände 3 und 4 jeweils plattenförmig sind. Die Gehäuse-Umfangswand 2 weist in einem ersten Winkelbereich, über den sich die Niederdruckseite der ersten Arbeitsflut erstreckt, an beiden Stirnseiten jeweils eine Ausnehmung auf, um den ersten Einlass 6 zu bilden. Ferner weist die Gehäuse-Umfangswand 2 in einem anderen Winkelbereich, über den sich die Niederdruckseite der zweiten Arbeitsflut erstreckt, an beiden Stirnseiten jeweils eine zweite Ausnehmung auf, um den zweiten Einlass 7 zu bilden. Das Fluid kann über die stirnseitigen Ausnehmungen der Gehäuse-Umfangswand 2, das heißt über den ersten Einlass 6 und den zweiten Einlass 7, in die Förderkammer 5 (Figur 1) strömen. Die Gehäuse-Umfangswand 2 weist im Winkelbereich des Einlasses 6 und im Winkelbereich des Einlasses 7 ferner jeweils eine Ausnehmung an ihrem äußeren Umfang auf. Die Ausnehmungen am Umfang erstrecken sich axial jeweils von der einen stirnseitigen Ausnehmung zur axial gegenüberliegend anderen stirnseitigen Ausnehmung. Die Ausnehmungen am Umfang verbinden die beiden stirnseitigen Ausnehmungen des ersten Einlasses 6 und auf der gegenüberliegenden Seite die beiden stirnseitigen Ausnehmungen des zweiten Einlasses 7, sodass ein vergleichsweise großvolumiger erster Einlass 6 und ein ebenfalls großvolumiger zweiter Einlass 7 erhalten werden. Die Stirnwände 3 und 4 können jeweils mit zugeordneten Ausnehmungen versehen sein, um den Strömungsquerschnitt des Einlasses 6 und den Strömungsquerschnitt des Einlasses 7 zu vergrößern.

In Figur 2 ist die Gehäuse-Stirnwand 4 mit einem der Montage der Pumpe dienenden Flansch dargestellt. Dieser Flansch ist in der axialen Sicht der Figur 1 aus Gründen der Vereinfachung nicht dargestellt. Im montierten Zustand ist das Pumpengehäuse 1 im Bereich des Flansches an einer Aufnahmeeinrichtung fixiert.

Am äußeren Umfang des Pumpengehäuses 1 ist eine Radialdichtung 33 angeordnet. Im Ausführungsbeispiel ist sie in einer am äußeren Umfang der Gehäuse-Stirnwand 4 umlaufenden Nut aufgenommen. Die Radialdichtung 33 dient dazu, am Einbauort einen Niederdruckraum, der das Pumpengehäuse 1 im montierten Zustand am äußeren Umfang umgibt, von der äußeren Umgebung der Pumpe zu trennen.

Die Wandstrukturen des Pumpengehäuses 1, nämlich die Gehäuse-Umfangswand 2, die erste Gehäuse-Stirnwand 3 und die zweite Gehäuse-Stirnwand 4, begrenzen gemeinsam die Förderkammer 5 (Figur 1) über ihren Umfang und axial an ihren Stirnseiten. Die Gehäuse-Stirnwände 3 und 4 liegen jeweils mit Axialkontakt an der Gehäuse-Umfangswand 2 an. Die Gehäuse-Umfangswand 2 kann mit den Stirnwänden 3 und 4 vorteilhafterweise lose, d. h. ohne Stoffschluss, gefügt sein.

Die Gehäuse-Umfangswand 2 und die Stirnwände 3 und 4 werden innerhalb der vormontierten Pumpeneinheit mittels einer Halteeinrichtung in einem axialen Schichtverbund zusammengehalten. Die Halteeinrichtung umfasst wenigstens einen Halter 13, im Ausführungsbeispiel umfasst sie, wie in Figur 1 erkennbar, einen ersten Halter 13 und einen zweiten Halter 13. Der jeweilige Halter 13 ragt stabförmig in axialer Richtung von der zweiten Gehäuse-Stirnwand 4 vor, durchragt die Gehäuse-Umfangswand 2 in axialer Richtung und durchragt die erste Gehäuse-Stirnwand 3 oder ragt in die erste Gehäuse-Stirnwand 3 hinein. Im Ausführungsbeispiel durchragt einer der Halter 13 die erste Gehäuse-Stirnwand 3, während der andere Halter 13 in eine Sackbohrung der Gehäuse-Stirnwand 3 hineinragt. Die Halter 13 können mit der zweiten Gehäuse-Stirnwand 4 reib- oder stoffschlüssig fest verbunden sein. Derjenige Halter 13, der die erste Gehäuse-Stirnwand 3 durchragt, ist mit der ersten Gehäuse-Stirnwand 3 oder der Sickendichtung 20 in einem Halteeingriff. Der Halteeingriff ist derart, dass der betreffende Halter 13 von der Gehäuse-Stirnwand 4 aus gesehen durch einen Durchgang der Gehäuse-Stirnwand 3 geführt, aber nach dem Durchführen nicht mehr zurückgezogen werden kann. Bei der Vormontage werden die Gehäuse-Umfangswand 2 und die erste Gehäuse-Stirnwand 3 längs der Halter 13 in Richtung auf die Gehäuse-Stirnwand 4 geschoben.

Die Sickendichtung 20 wird an der äußeren Stirnseite der Gehäuse-Stirnwand 3 am Pumpengehäuse 1 gehalten. Zur Zentrierung weist die Sickendichtung 20 einen zentralen Durchgang auf, der bei der Vormontage auf eine axiale Abragung 3a an der äußeren Stirnseite der Gehäuse-Stirnwand 3 geschoben wird. Die Sickendichtung 20 kann beispielsweise im Eingriff mit der Abragung 3a und/oder in einem Eingriff mit der Halteeinrichtung, d.h. im Eingriff mit wenigstens einem der Halter 13, am Pumpengehäuse 1 gehalten sein.

Die Federdichtung 15 wird im vormontierten Zustand ebenfalls an der äußeren Stirnseite der Gehäuse-Stirnwand 3 gehalten. Das mittels der Halteeinrichtung als loser Schichtverbund zusammengehaltene Pumpengehäuse 1 bildet mit der Federdichtung 14 und der Sickendichtung 20 die vormontierte Pumpeneinheit in Form einer einfach im Ganzen zu montierenden Montageeinheit.

Die Federdichtung 15 ist dafür eingerichtet, dass sie im montierten Zustand der Pumpe eine axiale Federkraft auf das Pumpengehäuse 1 ausübt, um die Gehäuse-Stirnwände 3 und 4 axial gegen die Gehäuse-Umfangswand 2 zu drücken und dadurch die Förderkammer 5 dicht zu halten. Zusätzlich dient die Federdichtung 15 dazu, die Auslässe von der Niederdruckseite der Pumpe zu trennen.

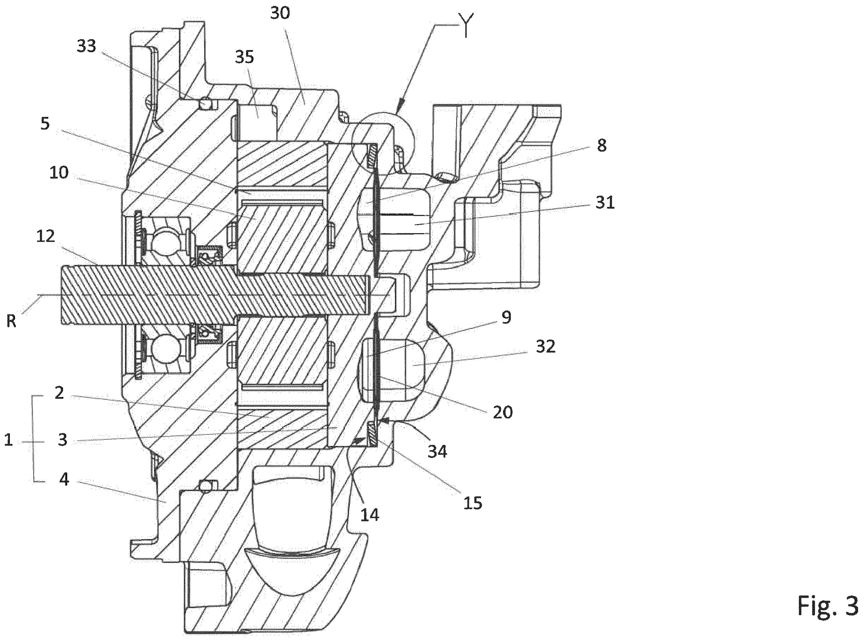

Figur 3 zeigt die Pumpe im montierten Zustand in einem Längsschnitt, der die Drehachse R schneidet. Die Pumpe ist an einer Aufnahmeeinrichtung 30 angeordnet. Die Anordnung ist derart, dass die Pumpe mit der Federdichtung 15 und der Sickendichtung 20 voran in einen Aufnahmeschacht der Aufnahmeeinrichtung 30 ragt. Die Pumpe liegt mit dem Montageflansch der Gehäuse-Stirnwand 4 an der Aufnahmeeinrichtung 30 an und ist im Bereich des Flansches an der Aufnahmeeinrichtung 30 befestigt, beispielsweise mittels Schraubverbindung.

Der Rotor 10 ist drehunbeweglich mit einer Antriebswelle 12 verbunden. Die Antriebswelle 12 durchsetzt die Gehäuse-Stirnwand 4 und den Rotor 10 und ragt in eine Sackbohrung der Gehäuse-Stirnwand 3. Die Antriebswelle 12 ragt mit einem Antriebsabschnitt über die Gehäuse-Stirnwand 4 nach außen vor und kann in diesem Antriebsabschnitt drehangetrieben werden. Im Antriebsabschnitt kann ein Antriebsrad, beispielsweise eine Riemenscheibe für einen Riemenantrieb, ein Kettenrad für einen Kettenantrieb oder ein Zahnrad für einen Zahnradantrieb, drehunbeweglich mit der Antriebswelle 12 verbunden sein. Der Wellendurchtritt der Gehäuse-Stirnwand 4 ist mittels einer Wellendichtung abgedichtet.

Die Pumpe ragt mit ihrer Anschlussseite voran in die Aufnahmeeinrichtung 30. Die äußere Gehäuse-Stirnfläche 14 der Gehäuse-Stirnwand 3 liegt einer Aufnahme-Stirnfläche 34 am Boden des Aufnahmeschachts in einem geringen axialen Abstand, d. h. über eine axiale Fuge, gegenüber.

Am äußeren Umfang des Pumpengehäuses 1 ist ein Niederdruckraum 35 gebildet, den radial außen ein Innenumfang der Aufnahmeeinrichtung 30, an einem Stirnende die Radialdichtung 33 und am anderen axialen Ende die Federdichtung 15 begrenzen. Im Pumpenbetrieb gelangt das Fluid über den Niederdruckraum 35 und die im Niederdruckraum 35 mündenden Einlässe 6 und 7 (Figuren 1 und 2) in die Förderkammer 5. Die Niederdruckseite der Pumpe umfasst den Niederdruckraum 35, die Einlässe 6 und 7 und die Niederdruckseite der Förderkammer 5.

An der Aufnahme-Stirnfläche 34 münden auf der Hochdruckseite der Pumpe ein erster Druckanschluss 31 und ein zweiter Druckanschluss 32, über die das Fluid in axialer Richtung abförderbar ist. Wie anhand der Figur 1 bereits erläutert, wird das Fluid im Bereich der ersten Arbeitsflut über einen durch die Gehäuse-Stirnwand 3 führenden ersten Auslass 8 und im Bereich der zweiten Arbeitsflut über einen ebenfalls durch die Gehäuse-Stirnwand 3 führenden zweiten Auslass 9 abgefördert. Die in Figur 1 erkennbaren Verbindungskanäle 8' und 9' münden in die zugeordneten Druckauslässe, der Verbindungskanal 8' in den ersten Auslass 8 und der Verbindungskanal 9' in den zweiten Auslass 9. Die Druckauslässe 8 und 9 erstrecken sich durch die Gehäuse-Stirnwand 3 und münden an deren äußeren Gehäuse-Stirnfläche 14 jeweils in einer Vertiefung der Gehäuse-Stirnwand 3. Diese Vertiefungen sind in Figur 3 erkennbar und werden hier ebenfalls als erster Auslass 8 und zweiter Auslass 9 bezeichnet. Der erste Auslass 8 der Pumpe liegt dem ersten Druckanschluss 31 axial gegenüber. Der zweite Auslass 9 der Pumpe liegt dem zweiten Druckanschluss 32 axial gegenüber. Im Pumpenbetrieb wird das Fluid der ersten Arbeitsflut über den ersten Auslass 8 und den ersten Druckanschluss 31 abgefördert. Das Fluid der zweiten Arbeitsflut wird über den zweiten Auslass 9 und den zweiten Druckanschluss 32 abgefördert.

Die Sickendichtung 20 ist in der zwischen der Gehäuse-Stirnfläche 14 und der Aufnahme-Stirnfläche 34 verbleibenden axialen Fuge angeordnet und trennt den ersten Auslass 8 und ersten Druckanschluss 31 vom zweiten Auslass 9 und zweiten Druckanschluss 32.

Die Federdichtung 15 stützt sich im montierten Zustand der Pumpe axial an der Aufnahme-Stirnfläche 34 ab und wirkt mit ihrer Federkraft axial auf die äußere Gehäuse-Stirnfläche 14. Die Federdichtung 15 drückt in dieser Weise mit Federkraft die Gehäuse-Stirnwand 3 gegen die Gehäuse-Umfangswand 2 und diese gegen die Gehäuse-Stirnwand 4, wodurch ein axial dichter und fester Verbund der Stirnwände 3 und 4 und der Gehäuse-Umfangswand 2 erhalten und die Dichtheit der Förderkammer 5 gewährleistet wird.

Die Federdichtung 15 umgibt den Auslass 8 und auch den Auslass 9 in einem einzigen, kontinuierlich und vollständig umlaufenden, in sich geschlossenen Bogen. Die Federdichtung 15 ist, wie bereits erwähnt, eine Tellerfeder. Sie trennt den ersten Auslass 8 und den zweiten Auslass 9 von der Niederdruckseite der Pumpe, im Ausführungsbeispiel insbesondere vom Niederdruckraum 35. Sie ist von der Hochdruckseite aus gesehen die der Niederdruckseite nächste Dichtung. Indem die Federdichtung 15 nicht nur die axiale Federkraft zum Zusammenpressen der Gehäusewände 2, 3 und 4 aufbringt, sondern in Zusatzfunktion zu einer Axialdichtung weitergebildet ist, kann auf eine Radialdichtung, wie sie üblicherweise am Außenumfang des Pumpengehäuses 1 zwischen der Hochdruckseite und der Niederdruckseite angeordnet ist, verzichtet werden.

Im Ausführungsbeispiel endet die Antriebswelle 12 in einer Sackbohrung der Stirnwand 3. In einer Modifikation der Pumpe kann die Stirnwand 3 anstelle einer Sackbohrung eine Durchgangsbohrung aufweisen, in die die Antriebswelle ragt. In derartigen Ausführungen kann eine weitere Dichtung vorgesehen sein, die den so gebildeten Wellendurchtritt gegen den Auslass 8 und auch den Auslass 9 abdichtet. Diese weitere Dichtung kann insbesondere als weitere Tellerfeder ausgeführt sein und einen in sich geschlossen um den Wellendurchtritt umlaufenden Axialdichtring bilden. Diese optionale weitere Tellerfeder ist mit einem ihrer beiden Dichtstege in einem um den Wellendurchtritt ringförmig geschlossenen Dichtkontakt mit der Gehäuse-Stirnfläche 14 und dem axial gegenüberliegenden Dichtsteg in einen umlaufend in sich geschlossenen Dichtkontakt mit der Aufnahme-Stirnfläche 34.

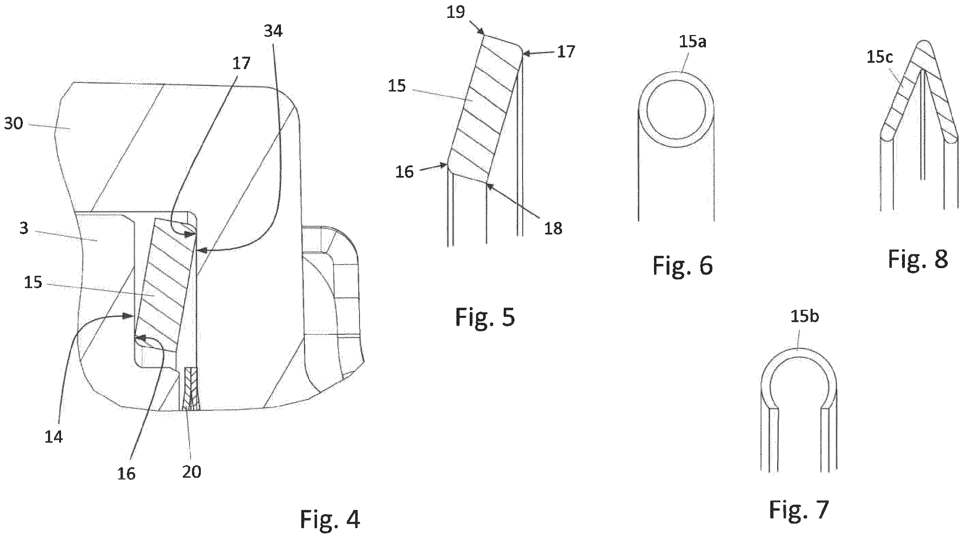

Figur 4 zeigt den in Figur 3 gekennzeichneten Detailbereich Y mit der Federdichtung 15. Die Tellerfeder 15 ist in Figur 5 auch einzeln dargestellt.

Die Federdichtung 15 ist im ersten Ausführungsbeispiel als Tellerfeder in Form eines Kegelstumpfmantels ausgeführt. Sie weist einen Innenumfang und einen Außenumfang auf, die axial zueinander versetzt sind. An einer der Gehäuse-Stirnfläche 14 zugewandten Stirnseite der Federdichtung 15 läuft dem Innenumfang nahe ein erster Feder-Dichtsteg 16 vollständig und unterbrechungsfrei, um. An der gegenüberliegenden, der Aufnahme-Stirnfläche 34 axial zugewandten Stirnseite läuft dem Außenumfang nahe ein zweiter Feder-Dichtsteg 17 vollständig und unterbrechungsfrei um. Die Gehäuse-Stirnfläche 14 weist den Feder-Dichtsteg 16 axial zugewandt eine vollständig umlaufende und unterbrechungsfrei glatte, beispielsweise plane Dichtanlage für den Feder-Dichtsteg 16 auf. Die Federdichtung 15 ist mit ihrem Feder-Dichtsteg 16 mit dieser Dichtanlage der Gehäuse-Stirnfläche 14 in einem Dichtkontakt. In entsprechender Weise bildet die Aufnahme-Stirnfläche 34 dem zweiten Feder-Dichtsteg 17 axial zugewandt umlaufend eine unterbrechungsfreie, glatte, beispielsweise plane Dichtanlage, die mit dem Feder-Dichtsteg 17 in einem Dichtkontakt ist. Im Dichtkontakt der beiden Feder-Dichtstege 16 und 17 mit der jeweils zugeordneten Dichtanlage trennt die Federdichtung 15 die Auslässe 8 und 9 von der Niederdruckseite der Pumpe.

Wie in den Figuren 4 und 5 erkennbar, ist die Federdichtung 15 in einem Übergangsbereich, der den Innenumfang mit der Stirnfläche verbindet, die der Gehäuse-Stirnwand 3 zugewandt ist, und in einem Übergangsbereich, der den Außenumfang mit der Stirnfläche verbindet, die der Aufnahme-Stirnfläche 34 zugewandt ist, jeweils weicher gerundet als in den beiden anderen, freien Übergangsbereichen 18 und 19, in denen kein Dichtkontakt besteht. Durch die weichere Rundung bzw. den größeren Krümmungsradius werden in den beiden Übergangsbereichen mit Dichtkontakt die vergleichsweise flachen Feder-Dichtstege 16 und 17 erhalten. Die Federdichtung 15 ist über die Feder-Dichtstege 16 und 17 hinweg gleichmäßig rund und glatt gewölbt mit jeweils dem gleichen oder gegebenenfalls auch unterschiedlichem Krümmungsradius. Durch die so erhaltene Abflachung oder weiche Rundung wird besser gewährleistet, dass die Feder-Dichtstege 16 und 17 beim Einfedern der Federdichtung 15 an der jeweils zugeordneten Dichtanlage der Gehäuse-Stirnfläche 14 und der Aufnahme-Stirnfläche unter Aufrechterhaltung des Dichtkontakts gleiten.

Figur 6 zeigt eine Federdichtung 15a eines zweiten Ausführungsbeispiels. Die Federdichtung 15a ist eine Hohlprofilfeder mit einem Kreisringprofil, das in einem geschlossenen Bogen unterbrechungsfrei um die Auslässe 8 und 9 (Figur 3) umläuft, wenn die Federdichtung 15a anstelle der Federdichtung 15 des ersten Ausführungsbeispiels verwendet wird. Anstelle eines Kreisringprofils könnte die Hohlprofilfeder 15a auch einen anderen, in sich geschlossenen Ringquerschnitt, beispielsweise ein elliptisches Hohlprofil oder anderes ovales Hohlprofil aufweisen.

Figur 7 zeigt eine Federdichtung 15b eines dritten Ausführungsbeispiels. Die Federdichtung 15b ist ebenfalls eine Hohlprofilfeder. Im Unterschied zur Federdichtung 15a des zweiten Ausführungsbeispiels ist das Hohlprofil der Federdichtung 15b umlaufend offen. Im Ausführungsbeispiel ist das Hohlprofil der Federdichtung 15b nach radial innen offen bzw. geschlitzt. In Abwandlungen kann das Hohlprofil auch nach radial außen offen bzw. geschlitzt sein. Das Hohlprofil der Federdichtung 15b ist C-förmig. Die Federdichtung 15b kann ebenfalls die Federdichtung 15 des ersten Ausführungsbeispiels ersetzen.

In Figur 8 ist eine Federdichtung 15c eines vierten Ausführungsbeispiels dargestellt. Die Federdichtung 15c ist eine V-Profilfeder, d. h. sie ist im Querschnitt V-förmig. Das V-Profil läuft im montierten Zustand der Federdichtung 15c ringförmig in einem in sich geschlossenen Bogen um die beiden Auslässe 8 und 9 (Figur 3). Im montierten Zustand ist das V-Profil mit einem seiner beiden Schenkelenden mit der Gehäuse-Stirnfläche 3 und mit dem freien Ende des anderen Schenkels mit der Aufnahme-Stirnfläche 14 in einem Dichtkontakt. Die Federdichtung 15c kann die Federdichtung 15 des ersten Ausführungsbeispiels ersetzen.

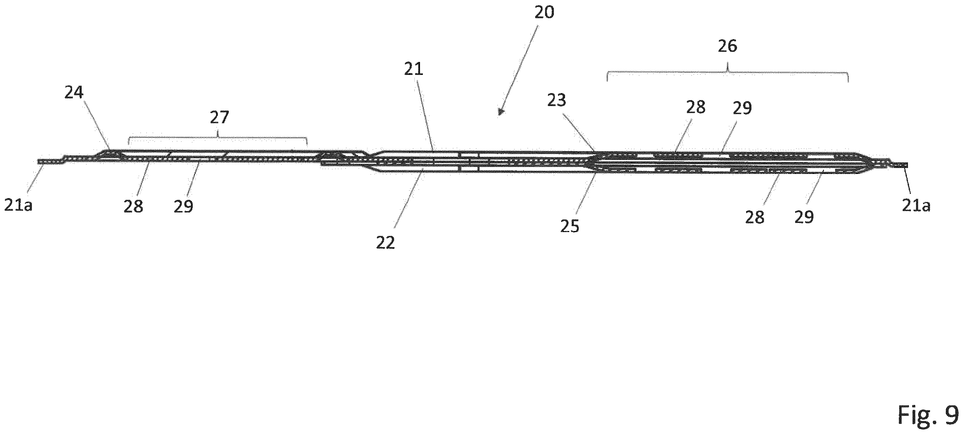

Figur 9 zeigt die Sickendichtung 20 als solche, losgelöst von der Pumpe in einem Längsschnitt.

Die Sickendichtung 20 umfasst eine erste Sickenschleife 23, die den ersten Innenbereich 26 umgibt. Die Sickenschleife 23 ist in Bezug auf den Innenbereich 26 eine kleinste Sickenschleife, die den Innenbereich 26 in axialer Draufsicht einschließt, d. h. vollständig umgibt. Die Sickenschleife 23 ist eine Halbsicke. Die Sickenschleife 23 ist im eingebauten Zustand dem Pumpengehäuse 1 axial zugewandt und daher in der Sicht der Figur 2 nicht erkennbar.

Die erste Sickenschleife 23 ist im Innenbereich 26 im Vergleich zu herkömmlichen Sickenschleifen versteift. Die Versteifung wird mittels einer ersten Versteifungsstruktur 28 erzielt, die sich vom Innenrand der Sickenschleife 23 umlaufend in den Innenbereich 26 erstreckt. Die Versteifungsstruktur 28 ist als plane, dünne Scheibe geformt. Sie weist eine Mehrzahl nebeneinander angeordneter Durchgänge 29 auf, durch die im Pumpenbetrieb das Fluid strömen kann. Die Versteifungsstruktur 28 erstreckt sich längs des gesamten Innenumfangs der Sickenschleife 23 und steift die Sickenschleife 23 über den gesamten Innenumfang nach radial innen gleichmäßig aus.

Die Sickendichtung 20 weist ferner die bereits in Figur 2 erkennbare weitere, zweite Sickenschleife 24 auf, die in der axialen Sicht den zweiten Innenbereich 27 umgibt. Die Sickenschleife 24 bildet in Bezug auf den Innenbereich 27 eine kleinste Sickenschleife, die in der axialen Sicht den Innenbereich 27 einschließt, d. h. vollständig umgibt. Die zweite Sickenschleife 24 ist eine Vollsicke. Auch die Sickenschleife 24 ist in ihrem Innenbereich 27 versteift. Der Versteifung dient eine zweite Versteifungsstruktur 28, die wie die erste Versteifungsstruktur 28 als plane, dünne Scheibe geformt ist. Die Versteifungsstruktur 28 erstreckt sich gleichmäßig über den gesamten Innenumfang der zweiten Sickenschleife 24, um diese über den Innenumfang gleichmäßig nach radial innen auszusteifen. Der ersten Versteifungsstruktur 28 vergleichbar, ist auch die zweite Versteifungsstruktur 28 mit einer Mehrzahl von nebeneinander angeordneten Durchgängen 29 für das von der Pumpe geförderte Fluid versehen.

Die erste Sickenschleife 23 und die zweite Sickenschleife 24 sind in der axialen Sicht nebeneinander angeordnet, so dass auch die zugehörigen Innenbereiche 26 und 27 nebeneinander und mit Abstand voneinander angeordnet sind. Im Ausführungsbeispiel verlaufen auch die Sickenschleifen 23 und 24 separat in einem Abstand voneinander. Zwischen den Sickenschleifen 23 und 24 befindet sich beispielsweise der zentrale Durchgang, welcher der Zentrierung der Sickendichtung 20 am Pumpengehäuse 1 dient. Die Sickendichtung 20 umfasst ferner die auch in Figur 2 erkennbare dritte Sickenschleife 25, die ebenfalls den ersten Innenbereich 26 umgibt. Die Sickenschleife 25 ist der Sickenschleife 23 vergleichbar nach radial innen versteift. Der Versteifung dient eine dritte Versteifungsstruktur 28, die als plane, dünne Scheibe geformt ist. Die dritte Versteifungsstruktur 28 entspricht der ersten Versteifungsstruktur 28 und weist wie diese Durchgänge 29 für das Fluid auf.

Im Ausführungsbeispiel überlappen in der axialen Sicht die erste Sickenschleife 23 und die dritte Sickenschleife 25 über ihren gesamten Verlauf. Die dritte Sickenschleife 25 ist der ersten Sickenschleife 23 entsprechend als Halbsicke geformt. Die Sickenschleifen 23 und 25 spreizen sich von ihrem Außenumfang ausgehend in axialer Richtung zum Innenbereich 26 hin voneinander weg, wodurch der axiale Federweg der Sickendichtung 20 im Bereich der Sickenschleifen 23 und 25 im Vergleich zu der jeweiligen Einzelsicke 23 und 25 vergrößert wird. Die Vergrößerung des axialen Federwegs ist im Hinblick auf die gewünschte Kompensation von Variationen der axialen Weite der abzudichtenden Fuge vorteilhaft.

Die Sickendichtung 20 ist mehrlagig. Sie umfasst eine erste Dichtungslage 21 und eine zweite Dichtungslage 22. Die erste Sickenschleife 23 und die erste Versteifungsstruktur 28 sind Bestandteil der ersten Dichtungslage 21. Die zweite Dichtungslage 22 bildet die dritte Dichtungssicke 25 und die dritte Versteifungsstruktur 28. Die Dichtungslagen 21 und 22 liegen unmittelbar aufeinander. Sie können vorteilhafterweise stoffschlüssig miteinander gefügt sein, beispielsweise mittels Schweiß- oder Lötverbindung oder einer Klebeverbindung.

Die erste Dichtungslage 21 bildet auch die zweite Sickenschleife 24 und deren Versteifungsstruktur 28.

Die Dichtungslagen 21 und 22 sind Blechstrukturen. Insbesondere kann es sich um Stahlblechstrukturen und bevorzugt um Federstahlstrukturen handeln. Grundsätzlich können die Blechstrukturen aber auch Kunststoffstrukturen sein, beispielsweise so genannte Organoblechstrukturen. Stahlblech und insbesondere Federstahlblech, wird jedoch der Vorzug gegeben.

Die Sickendichtung 20 weist am Außenumfang nach außen vorragende Laschen 21a auf, die der Positionierung der Sickendichtung relativ zum Pumpengehäuse 1 dienen und mit entsprechenden Positionierelementen des Pumpengehäuses 1, beispielsweise axialen Vorsprüngen an der Gehäuse-Stirnwand 3, zusammenwirken können. Die Laschen 21 a können stattdessen oder zusätzlich auch der Halterung am Pumpengehäuse 1 dienen. Hierzu können die Laschen 21a mit der Gehäuse-Stirnwand 3 gefügt, beispielsweise verschraubt, gelötet, geschweißt, geklebt etc. werden. Die Laschen 21a können stattdessen oder bevorzugt zusätzlich die Federdichtung 15 von der Gehäuse-Stirnwand 3 aus gesehen im Bereich des Innenumfangs hintergreifen, so dass die Federdichtung 15 im Hintergriff der Sickendichtung 20 im Rahmen der vormontierten Montageeinheit lose am Pumpengehäuse 1 gehalten wird.

Die Sickendichtung 20 ist vorteilhafterweise mit einer axialen Vorspannkraft eingebaut. Die Vorspannkraft ist zweckmäßigerweise so gewählt, dass sie unter allen Einbaubedingungen, d. h. in Bezug auf die unvermeidlichen Bauteil- und Einbautoleranzen und darüber hinaus auch in Bezug auf die mit Temperatur- und/oder Druckänderungen einhergehenden Variationen der axialen Weite der Fuge eine für die Dichtigkeit ausreichende Federkraft gewährleistet. In vorteilhaften Ausführungen ist die Sickendichtung 20 im Bereich der Sickenschleifen 23 und 25 so ausgelegt, dass sie Variationen der axialen Fugenweite von wenigstens 0,1 mm oder wenigstens 0,2 mm, vorzugsweise von 0,3 mm oder mehr, ausgleichen kann, d. h. über den jeweiligen Variationsbereich der axialen Fugenweite eine, ausreichende Abdichtung gewährleistet.

Die zweite Sickenschleife 24 kann so gestaltet sein, dass sie dichtend an einem den zweiten Auslass 9 umgebenden Umfangsrand und zugleich an der axial gegenüberliegenden Aufnahme-Stirnfläche 34, dort den zweiten Druckanschluss 32 umgebend, dichtend anliegt. Im Ausführungsbeispiel liegt die zweite Sickenschleife 24 im montierten Zustand der Pumpe allerdings nur an der äußeren Gehäuse-Stirnfläche 14 mit einer gewissen Vorspannkraft an, hat aber mit der Aufnahme-Stirnfläche 34 keinen Kontakt oder zumindest keinen Dichtkontakt. Die Trennung vom ersten Auslass 8 und ersten Druckanschluss 31 wird durch die erste Sickenschleife 23 und dritte Sickenschleife 25 erhalten. Die Trennung von der Niederdruckseite der Pumpe, insbesondere vom Niederdruckraum 35 wird durch die Federdichtung 15 gewährleistet.

Die Sickendichtung 20 ist in einem Kraftnebenschluss zur Federdichtung 15 angeordnet. Die Federdichtung 15 nimmt den überwiegenden Teil der bei Verringerung der Fugenweite über die Fuge wirkenden Axialkraft auf. Die Federdichtung 15 ist dementsprechend so ausgelegt, dass sie Variationen der axialen Fugenweite von wenigstens 0,1 mm oder wenigstens 0,2 mm, vorzugsweise von 0,3 mm oder mehr, ausgleichen kann und über den jeweiligen Variationsbereich der axialen Fugenweite eine ausreichende Abdichtung gewährleistet und zugleich den überwiegenden Teil der über die Fuge wirkende Axialkraft elastisch aufnimmt.

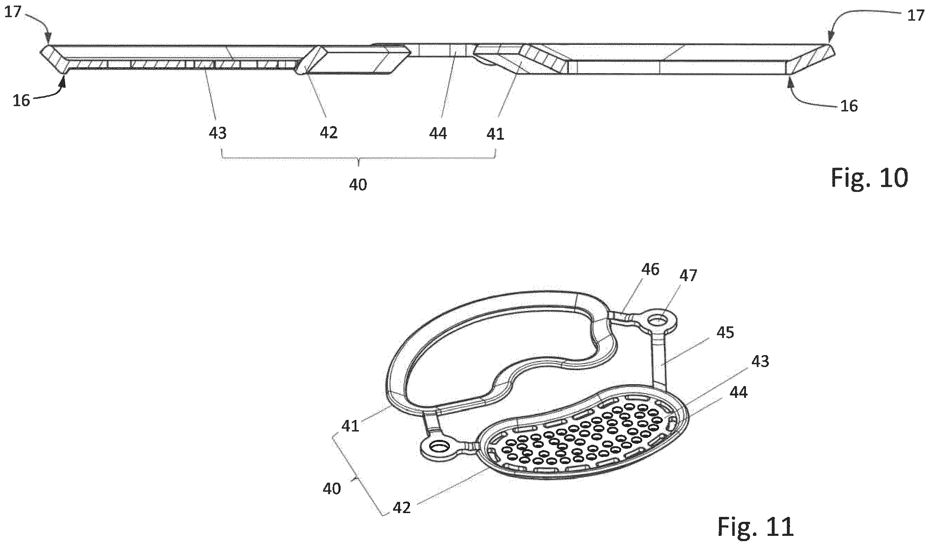

Figur 10 zeigt eine Federdichtung 41 eines fünften Ausführungsbeispiels in einem Längsschnitt. Die Federdichtung 41 ist eine Tellerfeder, die im Unterschied zur Federdichtung 15 des ersten Ausführungsbeispiels der Abdichtung nur des Auslasses 8 dient. Die Federdichtung 41 ist Bestandteil einer Dichtungseinheit 40, die neben der Federdichtung 41 eine weitere Dichtung 42 umfasst.

Die Dichtungseinheit 40 ist in Figur 11 in einer isometrischen Sicht dargestellt. Die weitere Dichtung 42 ist ebenfalls eine Tellerfeder und dient der Abdichtung nur des weiteren Auslasses 9. Die Federdichtung 41 und die weitere Dichtung 42 sind im Längsschnitt (Figur 10) und in der axialen Sicht nebeneinander angeordnet und über zwei Verbindungsstege 45 so miteinander verbunden, dass sie bei der Vormontage der Pumpeneinheit als Dichtungseinheit 40, d.h. wie ein einziges Bauteil, gehandhabt werden können.

Die Federdichtung 41 umschließt einen freien Innenbereich, der im montierten Zustand dem Auslass 8 axial gegenüberliegt. Die weitere Dichtung 42 umschließt mit ihrem Tellerfedersteg einen Innenbereich, der im montierten Zustand dem weiteren Auslass 9 axial gegenüberliegt. Die weitere Dichtung 42 weist in ihrem Innenbereich eine Widerstandsstruktur 43 auf, die mit Durchgängen versehen ist. Im Ausführungsbeispiel ist die Widerstandsstruktur 43 mit vielen kleinen Durchgängen, beispielsweise Durchgangslöchern, perforiert. Die Widerstandsstruktur 43 bildet einen Strömungswiderstand für das zu fördernde Fluid. Durch den Strömungswiderstand wird sichergestellt, dass die Flügel 11 (Figur 1) bei einem Anfahren der Pumpe, insbesondere im kalten Zustand und entsprechend zähem Fluid, nach radial außen gedrückt werden. Um diesen Effekt zu erzielen, werden die Flügel 11 an ihren Unterseiten, im sogenannten Unterflügelbereich, mit dem von der Pumpe geförderten Fluid beaufschlagt. Die Widerstandsstruktur 43 dient, wie gesagt, dazu, die Versorgung des Unterflügelbereichs mit Druckfluid zu gewährleisten.

Die Widerstandsstruktur 43 erzeugt einen Strömungswiderstand, kann aber in Bezug auf die Federeigenschaften und Dichtungseigenschaften der weiteren Dichtung 42 vernachlässigt werden. Um dies zu erreichen, weist die Widerstandsstruktur 43 eine geringere Materialstärke als der Tellerfedersteg der weiteren Dichtung 42 auf. Dies ist im Längsschnitt der Figur 10 erkennbar. Die weitere Dichtung 42 kann in einem ersten Schritt beispielsweise mit einem flachen Boden geformt werden, der in einem nachfolgenden Schritt durch Prägen verdünnt wird. Durch den Prägevorgang kann beispielsweise der innere, erste Dichtsteg 16 freigestellt werden. Im montierten Zustand der Pumpe ist der freigestellte Dichtsteg 16 im Dichtkontakt mit der Aufnahme-Stirnfläche 34 (Figur 3), und der axial gegenüberliegende, äußere, zweite Dichtsteg 17 ist im Dichtkontakt mit der Gehäuse-Stirnfläche 14. Denkbar ist auch, dass die Dichtungseinheit 40 umgedreht wird, so dass der erste Dichtsteg 16 mit der Gehäuse-Stirnfläche 14 und der Dichtsteg 17 mit der Aufnahme-Stirnfläche 34 im Dichtkontakt sind.

Um einer Aussteifung der weiteren Dichtung 42 noch weiter entgegenzuwirken, ist die Widerstandsstruktur 43 unmittelbar an ihrem Rand, über den sie mit dem Tellerfedersteg der Dichtung 42 verbunden ist, mehrfach ausgenommen, so dass längs dieses Rands Ausnehmungen 44 gebildet sind, derart, dass die Widerstandsstruktur 43 nur noch über schmale Stege, die zwischen den Ausnehmungen 44 verlaufen, mit dem Tellerfedersteg der weiteren Dichtung 42 verbunden ist.

Die Verbindungsstege 45 verbinden die Federdichtung 41 und die weitere Dichtung 42 einerseits ausreichend fest, so dass die Dichtungseinheit 40 bei der Vormontage einheitlich gehandhabt werden kann und die beiden Dichtungen 41 und 42 ihre relative Lage zueinander beibehalten. Andererseits sind die Verbindungsstege 45 ausreichend flexibel, um das Einfedern der Dichtungen 41 und 42 bei der Montage der Pumpeneinheit und das Ein- und Ausfedern im Betrieb der Pumpe nicht merklich zu behindern. Zur Erhöhung der Flexibilität und damit verbunden einer gewissen Nachgiebigkeit weisen die Verbindungsstege 45 jeweils mehrere Abprägungen 46 auf. Im Bereich der Abprägungen 46 ist die Materialstärke durch das Abprägen verringert.

Die Dichtungseinheit 40 kann im Bereich der Verbindungsstege 45 mit dem Pumpengehäuse 1 gefügt werden. Für das Fügen sind die Verbindungsstege 45 jeweils mit einem Durchgang 47 für ein Fügeelement, beispielsweise eine Befestigungsschraube zum Herstellen einer Schraubverbindung, versehen.

Bei Verwendung der Dichtungseinheit 40 mit den beiden nebeneinander, in Bezug auf die Förderung des Fluids parallel angeordneten Dichtungen 41 und 42 wird keine weitere Dichtung benötigt. Es wird auch keine weitere Federdichtung benötigt, um die Gehäusewände 2, 3 und 4 axial in dichtem Druckkontakt zu halten. Mit der Dichtungseinheit 40 kann zum einen die Zahl der Bauteile verringert werden, da die Funktionen des Abdichtens und des Andrückens in einem einzigen Bauteil vereint sind. Zum anderen kann die Dichtungseinheit 40 durch Prägen und Stanzen vergleichsweise einfach hergestellt werden.

### Bezugszeichen:

- 1: Pumpengehäuse
- 2: Gehäuse-Umfangswand
- 3: Gehäuse-Stirnwand
- 4: Gehäuse-Stirnwand
- 5: Förderkammer
- 6: Einlass
- 7: Einlass
- 8: Auslass
- 8': Verbindungskanal
- 9: Auslass
- 9': Verbindungskanal
- 10: Förderglied
- 11: Flügel
- 12: Antriebswelle
- 13: Halter
- 14: äußere Gehäuse-Stirnfläche
- 15: Federdichtung
- 15a: Federdichtung
- 15b: Federdichtung
- 15c: Federdichtung
- 16: Feder-Dichtsteg
- 17: Feder-Dichtsteg
- 18: Übergangsbereich
- 19: Übergangsbereich
- 20: weitere Dichtung, Sickendichtung
- 21: Dichtungslage
- 21a: Lasche
- 22: Dichtungslage
- 23: Sickenschleife
- 24: Sickenschleife
- 25: Sickenschleife
- 26: Innenbereich
- 27: Innenbereich
- 28: Versteifungsstruktur
- 29: Durchgang
- 30: Aufnahmeeinrichtung
- 31: Druckanschluss
- 32: Druckanschluss
- 33: Radialdichtung
- 34: Aufnahme-Stirnfläche
- 35: Niederdruckraum
- 40: Dichtungseinheit
- 41: Federdichtung
- 42: weitere Dichtung
- 43: Widerstandsstruktur
- 44: Ausnehmung
- 45: Verbindungssteg
- 46: Abprägung
- 47: Durchgang

## Patentansprüche

1. Pumpe zur Beaufschlagung eines Aggregats, beispielsweise eines Getriebes, mit Fluid, die Pumpe umfassend:
(a) ein Pumpengehäuse (1) mit
- einer Gehäuse-Umfangswand (2), die eine Förderkammer (5) der Pumpe umgibt,
- einer Gehäuse-Stirnwand (3) mit einer der Förderkammer (5) axial abgewandten äußeren Gehäuse-Stirnfläche (14),
- einem Einlass (6) für das Fluid und
- einem an der äußeren Gehäuse-Stirnfläche (14) mündenden Auslass (8) für das Fluid,
(b) ein in der Förderkammer (5) bewegliches Förderglied (10, 11) zur Förderung des Fluids von einer den Einlass (6) umfassenden Niederdruckseite der Pumpe zu einer den Auslass (8) umfassenden Hochdruckseite der Pumpe, und
(c) eine Axialdichtung, die den Auslass (8) zur Trennung von der Niederdruckseite in axialer Sicht auf die Gehäuse-Stirnwand (3) vollständig umgibt,
(d) wobei die Axialdichtung eine Federdichtung (15; 15a; 15b; 15c; 41) in Form einer Tellerfeder oder Hohlprofilfeder oder V-Profilfeder oder Balgfeder ist.

2. Pumpe nach dem vorhergehenden Anspruch, wobei die Federdichtung (15; 41) eine Tellerfeder mit einen Innenumfang und einem zum Innenumfang axial versetzten Außenumfang ist, wobei die Federdichtung (15; 41) dem Innenumfang nahe vollständig umlaufend einen ersten Feder-Dichtsteg (16) und dem Außenumfang nahe vollständig umlaufend einen dem ersten Feder-Dichtsteg (16) axial abgewandten zweiten Feder-Dichtsteg (17) aufweist, und wobei einer dieser Feder-Dichtstege (16, 17) der äußeren Gehäuse-Stirnfläche (14) axial zugewandt ist und in der axialen Sicht mit der äußeren Gehäuse-Stirnfläche (14) überlappt, um in einem vollständig umlaufenden Dichtkontakt mit der äußeren Gehäuse-Stirnfläche (14) den Auslass (8) von der Niederdruckseite zu trennen.

3. Pumpe nach dem vorhergehenden Anspruch, wobei sich die Federdichtung (15; 41) über eine der äußeren Gehäuse-Stirnfläche (14) axial zugewandte erste Stirnfläche und über eine der äußeren Gehäuse-Stirnfläche (14) axial abgewandte zweite Stirnfläche vom Innenumfang zum Außenumfang erstreckt, ein erster Übergangsbereich den Innenumfang umlaufend mit der ersten Stirnfläche, ein zweiter Übergangsbereich den Außenumfang umlaufend mit der zweiten Stirnfläche, ein dritter Übergangsbereich (18) den Innenumfang umlaufend mit der zweiten Stirnfläche und ein vierter Übergangsbereich (19) den Außenumfang umlaufend mit der ersten Stirnfläche verbinden, einer der Feder-Dichtstege (16, 17) im ersten Übergangsbereich verläuft und der andere der Feder-Dichtstege (16, 17) im zweiten Übergangsbereich verläuft, und wobei wenigstens einer der Feder-Dichtstege (16, 17) im Vergleich zum dritten und/oder vierten Übergangsbereich (18, 19) abgeflacht und/oder mit einem größeren Krümmungsradius gerundet ist.

4. Pumpe nach einem der vorhergehenden Ansprüche, wobei die Federdichtung (15; 15a; 15b; 15c; 41) eine reine Metallfeder ist.

5. Pumpe nach einem der vorhergehenden Ansprüche, wobei die Federdichtung (15; 15a; 15b; 15c, 41) in dem von der Hochdruckseite zur Niederdruckseite entlang des Pumpengehäuses (1) erstreckten Druckpfad eine der Niederdruckseite nächste Dichtung ist.

6. Pumpe nach einem der vorhergehenden Ansprüche, wobei die Federdichtung (41) in dem vom Auslass (8) zur Niederdruckseite entlang des Pumpengehäuses (1) erstreckten Druckpfad eine dem Auslass (8) nächste Dichtung ist.

7. Pumpe nach einem der vorhergehenden Ansprüche, wobei die Pumpe eine weitere Dichtung (20) umfasst, die in der axialen Sicht den Auslass (8) zur Abdichtung umgibt, und wobei die Federdichtung (15; 15a; 15b; 15c) die weitere Dichtung (20) oder die weitere Dichtung (20) die Federdichtung (15; 15a; 15b; 15c) umgibt, wobei die weitere Dichtung (20) vorzugsweise eine Sickendichtung, vorzugsweise eine Metallsickendichtung ist.

8. Pumpe nach dem vorhergehenden Anspruch, wobei die Federdichtung (15; 15a; 15b; 15c) mittels der weiteren Dichtung (20) am Pumpengehäuse (1) gehalten wird.

9. Pumpe nach einem der vorhergehenden Ansprüche und Anspruch 7, wobei die Pumpe in oder an einer Aufnahmeeinrichtung (30) montiert ist und die weitere Dichtung (20) zwischen der äußeren Gehäuse-Stirnfläche (14) und einer Aufnahme-Stirnfläche (34) der Aufnahmeeinrichtung (30) in einem axialen Kraftnebenschluss zur Federdichtung (15; 15a; 15b; 15c) angeordnet ist.

10. Pumpe nach einem der vorhergehenden Ansprüche, wobei die Pumpe eine erste Flut mit dem Einlass (6) und dem Auslass (8) und eine weitere Flut mit einem weiteren Auslass (9) und optional einem weiteren Einlass (7) umfasst und die Federdichtung (15; 15a; 15b; 15c) in der axialen Sicht auch den weiteren Auslass (9) umgibt, um die Auslässe (8, 9) von der Niederdruckseite zu trennen.

11. Pumpe nach einem der Ansprüche 1 bis 9, wobei die Pumpe eine erste Flut mit dem Einlass (6) und dem Auslass (8) und eine weitere Flut mit einem weiteren Auslass (9) und optional einem weiteren Einlass (7) und eine weitere Axialdichtung in Form einer weiteren Federdichtung (42) umfasst, die in der axialen Sicht den weiteren Auslass (9) umgibt, wobei die Federdichtungen (41, 42) Tellerfedern und in der axialen Sicht nebeneinander angeordnet sind, um die Auslässe (8, 9) voneinander und von der Niederdruckseite zu trennen.

12. Pumpe nach einem der vorhergehenden Ansprüche, wobei die Pumpe in oder an einer Aufnahmeeinrichtung (30) montiert ist und die Federdichtung (15; 15a; 15b; 15c; 41) zwischen der äußeren Gehäuse-Stirnfläche (14) und einer Aufnahme-Stirnfläche (34) der Aufnahmeeinrichtung (30) in einem axialen Krafthauptschluss angeordnet und axial gespannt ist.

13. Pumpe nach einem der vorhergehenden Ansprüche, wobei die Pumpe eine Aufnahmeeinrichtung (30) umfasst oder in einer Aufnahmeeinrichtung (30) angeordnet ist, die Aufnahmeeinrichtung (30) das Pumpengehäuse (1) umgibt und einen Boden mit einer Aufnahme-Stirnfläche (34) und einem Anschluss (31) für den Auslass (8) umfasst und die Federdichtung (15; 15a; 15b; 15c; 41) mit der äußeren Gehäuse-Stirnfläche (14) und der Aufnahme-Stirnfläche (34) jeweils in einem Dichtkontakt ist, um die Hochdruckseite von der Niederdruckseite der Pumpe zu trennen.

14. Pumpe nach dem vorhergehenden Anspruch, wobei die Aufnahme-Stirnfläche (34) im Bereich eines ihr axial zugewandten Feder-Dichtstegs (17) der Federdichtung (15; 15a; 15b; 15c; 41) umlaufend glatt, beispielsweise plan ist, um umlaufend eine unterbrechungsfreie Dichtanlage für den ihr axial zugewandten Feder-Dichtsteg (17) zu bilden, und/oder wobei die äußere Gehäuse-Stirnfläche (14) im Bereich eines ihr axial zugewandten Feder-Dichtstegs (16) der Federdichtung (15; 15a; 15b; 15c; 41) umlaufend glatt, beispielsweise plan ist, um umlaufend eine unterbrechungsfreie Dichtanlage für den ihr axial zugewandten Feder-Dichtsteg (16) zu bilden.

15. Pumpe nach einem der vorhergehenden Ansprüche, wobei die Gehäuse-Umfangswand (2) und die Gehäuse-Stirnwand (3) axial in Druckkontakt aneinander liegen und die Förderkammer (5) am Umfang und einer Stirnseite begrenzen, und wobei die Federdichtung (15; 15a; 15b; 15c; 41) in einem montierten Zustand der Pumpe die Gehäuse-Stirnwand (3) mit Federkraft axial gegen die Gehäuse-Umfangswand (2) presst.
